# EUROPEAN PATENT SPECIFICATION

(11) **EP 4 207 096 B1**
(45) Date of publication and mention of the grant of the patent: **10.12.2025**
(21) Application number: 22196321.8
(22) Date of filing: 19.09.2022
(51) Int. Cl.: G06V 10/80, G06V 20/40, G06V 20/52, G06V 40/16, G06V 40/20

(54) **INFORMATION PROCESSING PROGRAM, INFORMATION PROCESSING METHOD, AND INFORMATION PROCESSING APPARATUS**
INFORMATIONSVERARBEITUNGSPROGRAMM, INFORMATIONSVERARBEITUNGSVERFAHREN UND INFORMATIONSVERARBEITUNGSVORRICHTUNG
PROGRAMME DE TRAITEMENT D'INFORMATIONS, PROCÉDÉ DE TRAITEMENT D'INFORMATIONS ET APPAREIL DE TRAITEMENT D'INFORMATIONS

(30) Priority: 28.12.2021 JP 2021215275
(43) Date of publication of application: 05.07.2023
(73) Proprietor: FUJITSU LIMITED, Kawasaki-shi, Kanagawa 211-8588 (JP)
(72) Inventor: Kimura, Yoshie, Kawasaki-shi, Kanagawa, 211-8588 (JP); Saito, Junya, Kawasaki-shi, Kanagawa, 211-8588 (JP); Yamamoto, Takuma, Kawasaki-shi, Kanagawa, 211-8588 (JP); Saito, Takahiro, Kawasaki-shi, Kanagawa, 211-8588 (JP)
(74) Representative: Hoffmann Eitle

(56) References cited:
- CN-A- 110 378 281
- US-A1- 2015 363 644
- PANAGIOTIS P FILNTISIS ET AL: "Fusing Body Posture with Facial Expressions for Joint Recognition of Affect in Child-Robot Interaction", ARXIV.ORG, CORNELL UNIVERSITY LIBRARY, 201 OLIN LIBRARY CORNELL UNIVERSITY ITHACA, NY 14853, 7 January 2019 (2019-01-07), XP081012043

## Description

### FIELD

The embodiments discussed herein are related to a computer-readable recording medium, an information processing method, and an information processing apparatus.

### BACKGROUND

A behavior recognition technology for recognizing a behavior of a person from video data is known. For example, a technology for recognizing, from video data that is captured by a camera or the like, an action or a behavior performed by a person by using skeleton information on the person in the video data is known. In recent years, with the spread of self-checkout in a supermarket or a convenience store or the spread of a monitoring camera in a school, a train, a public facility, or the like, human behavior recognition is actively introduced.

Patent Document 1: International Publication Pamphlet No. 2019/049216

However, a behavior of a person that is recognized by the behavior recognition technology as described above indicates a behavior that is currently performed or that was performed in the past by the person. Therefore, in some cases, even if a countermeasure is taken after recognition of a predetermined behavior performed by the person, it may be too late to take the countermeasure.

Accordingly, it is an object in one aspect of an embodiment of the present invention to provide an information processing program, an information processing method, and an information processing apparatus capable of detecting a situation in which a countermeasure is needed in advance from video data.

Further background is provided in the following documents.

US 2015/0363644 A1 discloses an activity recognition system. A plurality of temporal features is generated from a digital representation of an observed activity using a feature detection algorithm. An observed activity graph comprising one or more clusters of temporal features generated from the digital representation is established, wherein each one of the one or more clusters of temporal features defines a node of the observed activity graph. At least one contextually relevant scoring technique is selected from similarity scoring techniques for known activity graphs, the at least one contextually relevant scoring technique being associated with activity ingestion metadata that satisfies device context criteria defined based on device contextual attributes of the digital representation, and a similarity activity score is calculated for the observed activity graph as a function of the at least one contextually relevant scoring technique, the similarity activity score being relative to at least one known activity graph.

CN 110378281 A discloses a group behavior recognition method based on a pseudo 3D convolutional neural network. The group behavior recognition method comprises the following steps: (1) carrying out human body posture estimation and target tracking by utilizing an OpenPose posture estimation algorithm; (2) extracting spatial and temporal features of each person by using a P3D ResNet (pseudo 3D residual network), and classifying the spatial and temporal features by using a softmax classifier to complete single person behavior recognition; (3) constructing a human body target interaction graph by utilizing the position information and the appearance characteristics of the human body target, and performing graph reasoning and training by utilizing a graph convolution network; and (4) performing group behavior identification according to the human body target interaction graph.

Filntisis, P.P., Efthymiou, N., Koutras, P., Potamianos, G. and Maragos, P., 2019. Fusing body posture with facial expressions for joint recognition of affect in child-robot interaction. IEEE Robotics and automation letters, 4(4), pp.4011-4018 discloses a method for automatic recognition of affect that leverages body expressions alongside facial ones by using a deep-learning based method with hierarchical multi-label annotations and multi-stage losses.

### SUMMARY

There is provided an information processing program as set out in Claim 1. There is also provided an information processing method as set out in Claim 9. There is also provided an information processing apparatus as set out in Claim 10.

### BRIEF DESCRIPTION OF DRAWINGS

FIG. 1 is a diagram illustrating an overall configuration example of a behavior prediction system according to a first embodiment;
FIG. 2 is a diagram for explaining an information processing apparatus that implements behavior prediction according to the first embodiment;
FIG. 3 is a diagram for explaining specific examples of the behavior prediction;
FIG. 4 is a functional block diagram illustrating a functional configuration of the information processing apparatus according to the first embodiment;
FIG. 5 is a diagram illustrating an example of a scene graph;
FIG. 6 is a diagram illustrating an example of a facial expression recognition rule;
FIG. 7 is a diagram illustrating an example of a higher-level behavior identification rule;
FIG. 8 is a diagram illustrating an example of a behavior prediction model;
FIG. 9 is a diagram for explaining an example of generation of a scene graph that represents a relationship between a person and an object;
FIG. 10 is a diagram for explaining an example of generation of a scene graph that represents a relationship between a person and another person;
FIG. 11 is a diagram for explaining generation of a skeleton recognition model;
FIG. 12 is a diagram for explaining an example of generation of a facial expression recognition model;
FIG. 13 is a diagram illustrating an example of arrangement of cameras;
FIG. 14 is a diagram for explaining movement of markers;
FIG. 15 is a diagram for explaining an example of generation of the higher-level behavior identification rule;
FIG. 16 is a diagram for explaining an example of generation of a Bayesian network that is the behavior prediction model;
FIG. 17 is a diagram for explaining identification of a relationship;
FIG. 18 is a diagram for explaining a specific example of identification of a current behavior of a person;
FIG. 19 is a diagram for explaining another example of identification of a current behavior of a person;
FIG. 20 is a diagram for explaining prediction of a behavior of a person;
FIG. 21 is a diagram for explaining prediction of a behavior of a person using the Bayesian network;
FIG. 22 is a flowchart illustrating the flow of a behavior prediction process;
FIG. 23 is a diagram for explaining an example of a solution to which behavior prediction related to a person and an object is adopted;
FIG. 24 is a diagram for explaining an example of a solution to which behavior prediction related to a person and another person is adopted; and
FIG. 25 is a diagram for explaining a hardware configuration example.

### DESCRIPTION OF EMBODIMENTS

According to an aspect of an embodiment, an information processing program that causes a computer (10) to execute a process. The process includes acquiring (51) video data that includes target objects including a person and an object, first identifying (52) a relationship between the target objects in the acquired video data, by using graph data that indicates a relationship between target objects and that is stored in a storage, second identifying (53) a behavior of the person in the video data by using a feature value of the person included in the acquired video data, and predicting (54) one of a future behavior and a future state of the person by inputting the identified behavior of the person and the identified relationship to a machine learning model.

Preferred embodiments will be explained with reference to accompanying drawings. The present invention is not limited by the embodiments below. In addition, the embodiments may be combined appropriately as long as no contradiction is derived.

### [a] First Embodiment

### Overall Configuration

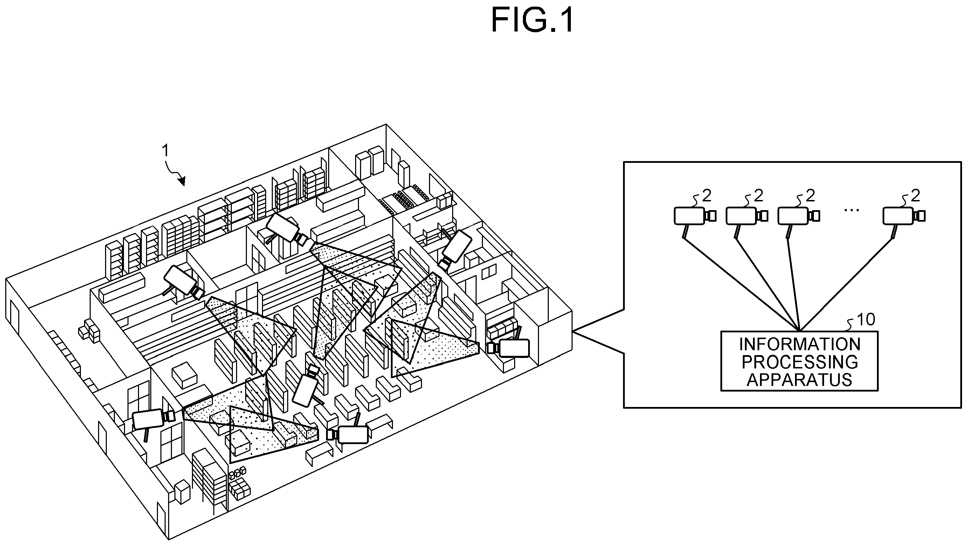

FIG. 1 is a diagram illustrating an overall configuration example of a behavior prediction system according to a first embodiment. As illustrated in FIG. 1, the behavior prediction system includes a store 1 that is one example of a space, a plurality of cameras 2 that are installed in different places in the store 1, and an information processing apparatus 10 that analyzes video data.

Each of the cameras 2 is one example of a monitoring camera that captures an image of a predetermined area in the store 1, and transmits data of a captured video to the information processing apparatus 10. In the following descriptions, the data of the video may be referred to as "video data". Further, the video data includes a plurality of frames in chronological order. A frame number is assigned to each of the frames in ascending chronological order. Each of the frames is image data of a still image that is captured by each of the cameras 2 at a certain timing.

The information processing apparatus 10 is one example of a computer that analyzes each piece of image data captured by each of the cameras 2. Meanwhile, each of the cameras 2 and the information processing apparatus 10 are connected to each other by using various networks, such as the Internet or a dedicated line, regardless of whether the networks are wired or wireless.

In recent years, monitoring cameras are set not only in the store 1, but also in town, station platforms, and the like, and various services are provided to realize a safe and secure society by using video data acquired by the monitoring cameras. For example, services for detecting an occurrence of shoplifting, an occurrence of an accident, an occurrence of a suicide by jumping, or the like, and using the detection for dealing with aftermath are provided. However, all of the services that are currently provided cope with post-detection, and, from the viewpoint of prevention, video data is not effectively used for a sign of shoplifting, a possibility of a suspicious person, a sign of a sudden attack of illness, a sign of dementia, Alzheimer, or the like that can hardly be determined at first glance.

To cope with this, in the first embodiment, the information processing apparatus 10 that implements "behavior prediction" to predict a future behavior or a future internal state of a person by combining a "behavior analysis" for analyzing a current facial expression and a current behavior of the person and "context sensing" for detecting a surrounding environment, an object, and a relationship with the environment or the object will be described.

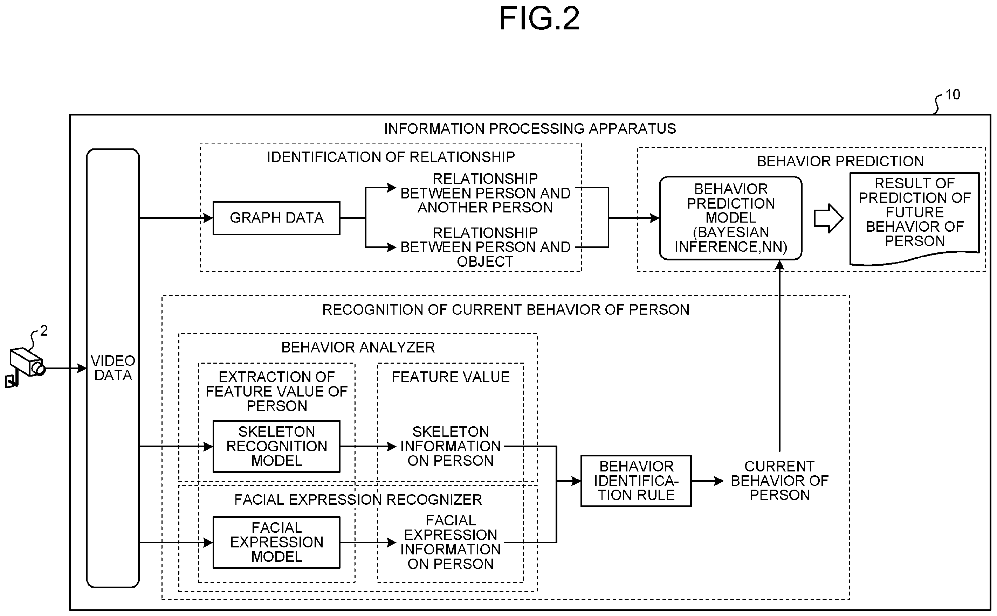

FIG. 2 is a diagram for explaining the information processing apparatus 10 that implements the behavior prediction according to the first embodiment. As illustrated in FIG. 2, the information processing apparatus 10 identifies a relationship and recognizes a behavior of a person with respect to video data, and predicts a behavior of the person by using the identified relationship and the recognized behavior.

Specifically, the information processing apparatus 10 acquires video data that includes target objects including a person and an object. Then, the information processing apparatus 10 identifies a relationship between the target objects in the video data by using graph data that indicates the relationship between the target objects and that is stored in a storage unit. Further, the information processing apparatus 10 identifies a current behavior of the person in the video data by using a feature value of the person included in the video data. Thereafter, the information processing apparatus 10 inputs the identified current behavior of the person and the identified relationship to a machine learning model, and predicts a future behavior of the person, such as a sign of shoplifting, or a state of the person, such as Alzheimer.

For example, as illustrated in FIG. 2, the information processing apparatus 10 identifies a type of a person, a type of an object, and the like included in the video data, searches for graph data, such as a scene graph, in which various relationships are determined in advance, and identifies a relationship between a person and another person or a relationship between a person and an object.

Further, the information processing apparatus 10 recognizes a current behavior of the person by using a behavior analyzer and a facial expression recognizer. Specifically, the behavior analyzer inputs the video data to a trained skeleton recognition model, and acquires skeleton information that is one example of a feature value on the person. The facial expression recognizer inputs the video data to a trained facial expression recognition model, and acquires facial expression information that is one example of the feature value on the person. Furthermore, the information processing apparatus 10 refers to a behavior identification rule that is determined in advance, and recognizes a current behavior of the person corresponding to a combination of the identified skeleton information and the identified facial expression information on the person.

Thereafter, the information processing apparatus 10 inputs the relationship between the person and another person or the relationship between the person and the object and the current behavior of the person to the behavior prediction model that is one example of a machine learning model using Bayesian inference, a neural network, or the like, and acquires a result of the prediction of a future behavior of the person.

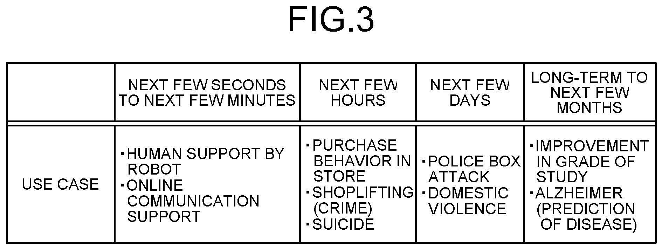

Here, as for the behavior that is predicted by the information processing apparatus 10, it is possible to perform various predictions from a short-term prediction to a long-term prediction. FIG. 3 is a diagram for explaining specific examples of the behavior prediction. As illustrated in FIG. 3, the behavior prediction that is performed by the information processing apparatus includes not only a "behavior", such as a purchase behavior and shoplifting, that can be determined by appearance of a person, but also an "emotion" and a "state", such as a disease, that is not easily determined by appearance of the person and that is affected by an internal state of the person.

Specifically, the information processing apparatus 10 predicts, as a super short-term prediction for next few seconds or next few minutes, an occurrence or a need of "human support by a robot", "online communication support", or the like. The information processing apparatus 10 predicts, as a short-term prediction for next few hours, an unexpected event or an event that occurs with a small amount of movement from a place in which a current behavior is performed, such as a "purchase behavior in a store", a "crime including shoplifting or stalking", or a "suicide". The information processing apparatus 10 predicts, as a medium-term prediction for next few days, an occurrence of a planned crime, such as a "police box attack" or "domestic violence". The information processing apparatus 10 predicts, as a long-term prediction for next few months, a potential event (state), such as "improvement in grade of study or sales" or a "prediction of disease including Alzheimer", which is not recognizable by appearance.

In this manner, the information processing apparatus 10 is able to detect a situation in which a countermeasure is needed in advance from the video data, so that it is possible to provide a service that aims at achieving a safe and secure society.

### Functional Configuration

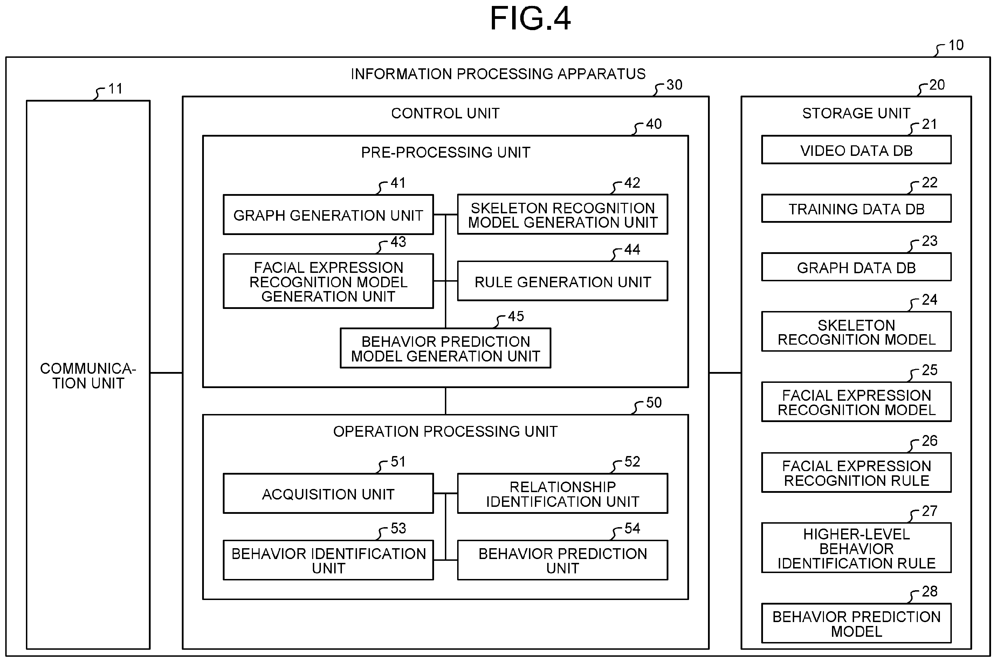

FIG. 4 is a functional block diagram illustrating a functional configuration of the information processing apparatus 10 according to the first embodiment. As illustrated in FIG. 4, the information processing apparatus 10 includes a communication unit 11, a storage unit 20, and a control unit 30.

The communication unit 11 is a processing unit that controls communication with a different apparatus, and is implemented by, for example, a communication interface or the like. For example, the communication unit 11 receives video data or the like from each of the cameras 2, and outputs a processing result obtained by the information processing apparatus 10 or the like to an apparatus or the like that is designated in advance.

The storage unit 20 is a processing unit that stores therein various kinds of data, a program executed by the control unit 30, and the like, and is implemented by, for example, a memory, a hard disk, or the like. The storage unit 20 stores therein a video data database (DB) 21, a training data DB 22, a graph data DB 23, a skeleton recognition model 24, a facial expression recognition model 25, a facial expression recognition rule 26, a higher-level behavior identification rule 27, and a behavior prediction model 28.

The video data DB 21 is a database for storing video data that is captured by each of the cameras 2 that are installed in the store 1. For example, the video data DB 21 stores therein video data for each of the cameras 2 or for each period of image capturing time.

The training data DB 22 is a database for storing graph data and various kinds of training data used to generate various machine learning models, such as the skeleton recognition model 24, the facial expression recognition model 25, and the behavior prediction model 28. The training data stored herein includes supervised training data to which correct answer information is added and unsupervised training data to which correct answer information is not added.

The graph data DB 23 is a database for storing a scene graph that is one example of graph data indicating a relationship between the target objects included in the video data. Specifically, the graph data DB 23 stores therein a scene graph in which a relationship between a person and another person and/or a relationship between a person and an object is defined. In other words, the scene graph is graph data in which each of objects (persons, products, and the like) included in each piece of image data in the video data and relationships between the objects are described.

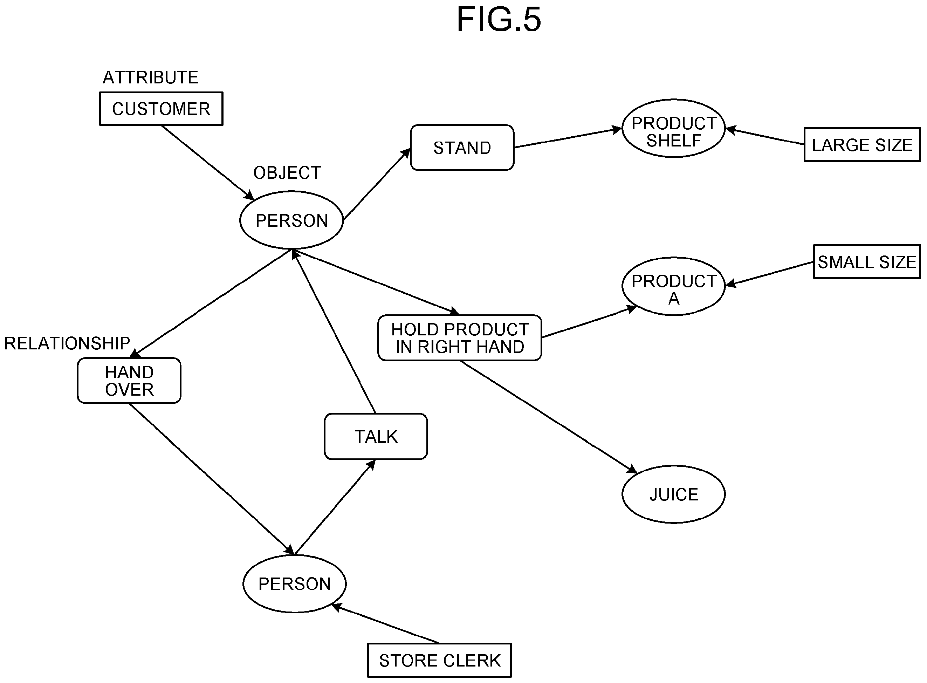

FIG. 5 is a diagram illustrating an example of the scene graph. As illustrated in FIG. 5, the scene graph is a directed graph in which objects that appear in image data serve as nodes, each of the nodes has an attribute (for example, a type of the object), and relationships between the nodes serve as directed edges. In the example illustrated in FIG. 5, it is indicated that a node of a "person" with an attribute of a "store clerk" has a relationship of "talk" with respect to a node of a "person" with an attribute of a "customer". In other words, a relationship is defined such that "the store clerk talks with the customer". Further, it is indicated that the node of the "person" with the attribute of the "customer" has a relationship of "stand" with respect to a node of a "product" with an attribute of a "large size". In other words, a relationship is defined such that "customer stands in front of product shelf of large-size product".

Meanwhile, the relationship described above is only one example. For example, the relationship includes not only a simple relationship, such as "hold", but also a complex relationship, such as "hold product A in right hand", "stalking person walking ahead", or "looking over his/her shoulder". Meanwhile, the graph data DB 23 may stores therein each of a scene graph corresponding to a relationship between a person and another person and a scene graph corresponding to a relationship between a person and an object, or may stores thereon a single scene graph including each of the relationships. Further, while the scene graph is generated by the control unit 30 to be described later, it may be possible to use data that is generated in advance.

The skeleton recognition model 24 is one example of a first machine learning model for generating skeleton information that is one example of a feature value of a person. Specifically, the skeleton recognition model 24 outputs two-dimensional skeleton information, in accordance with input of image data. For example, the skeleton recognition model 24 is one example of a deep learning device that estimates a two-dimensional joint position (skeleton coordinate), such as a head, a wrist, a waist, or an ankle, with respect to two-dimensional image data of a person, and recognizes a basic action and a rule that is defined by a user.

With use of the skeleton recognition model 24, it is possible to recognize a basic action of a person, and acquire a position of an ankle, a face orientation, and a body orientation. Examples of the basic action include walk, run, and stop. The rule that is defined by the user includes a change of the skeleton information corresponding to each of behaviors that are performed before taking a product in hand. While the skeleton recognition model 24 is generated by the control unit 30 to be described later, it may be possible to use data that is generated in advance.

The facial expression recognition model 25 is one example of a second machine learning model for generating facial expression information related to a facial expression that is one example of a feature value of a person. Specifically, the facial expression recognition model 25 is a machine learning model that estimates an action unit (AU) that is a method of disassembling and quantifying a facial expression on the basis of parts of a face and facial muscles. The facial expression recognition model 25 outputs, in accordance with input of image data, a facial expression recognition result, such as "AU1: 2, AU2: 5, AU4: 1, ...", that represents occurrence strength (for example: five-grade evaluation) of each of AUs from AU1 to AU28 that are set to identify a facial expression. While the facial expression recognition model 25 is generated by the control unit 30 to be described later, it may be possible to use data that is generated in advance.

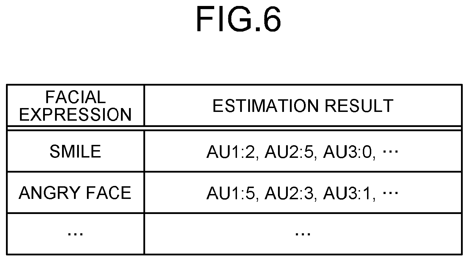

The facial expression recognition rule 26 is a rule for recognizing a facial expression by using an output result from the facial expression recognition model 25. FIG. 6 is a diagram illustrating an example of the facial expression recognition rule 26. As illustrated in FIG. 6, the facial expression recognition rule 26 stores therein a "facial expression" and an "estimation result" in an associated manner. The "facial expression" is a facial expression of a recognition target, and the "estimation result" is strength of each of the AUs from the AU1 to the AU28 corresponding to each of facial expressions. In the example illustrated in FIG. 6, it is indicated that if "the AU1 has the strength of 2, the AU2 has the strength of 5, the AU3 has the strength of 0, ...", a facial expression is recognized as a "smile". Meanwhile, the facial expression recognition rule 26 is data that is registered in advance by an administrator or the like.

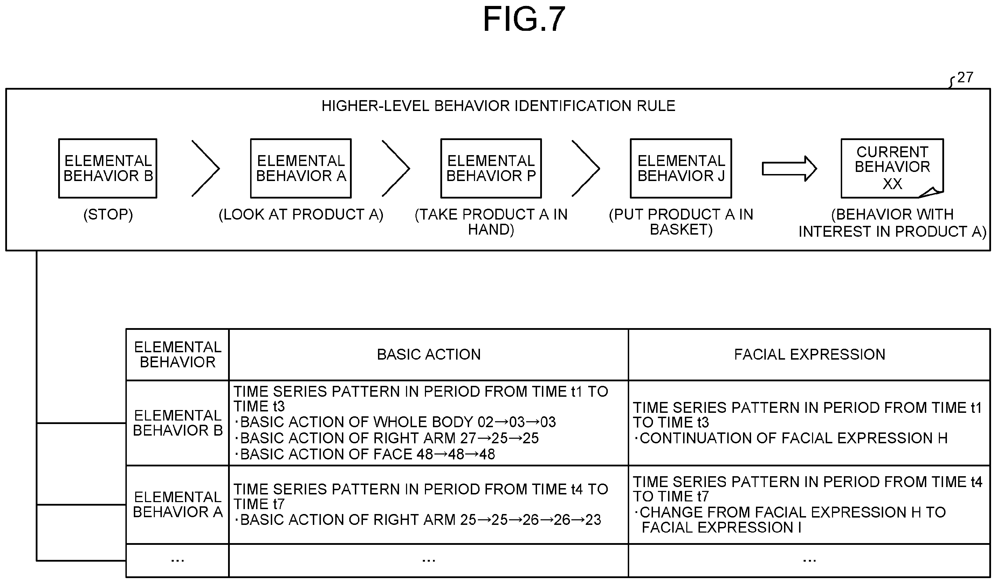

The higher-level behavior identification rule 27 is a rule for identifying a current behavior of a person. FIG. 7 is a diagram illustrating an example of the higher-level behavior identification rule 27. As illustrated in FIG. 7, the higher-level behavior identification rule 27 is a rule in which a current behavior and a change of elemental behaviors, which are performed to identify the current behavior, are associated.

In the example illustrated in FIG. 7, it is defined that a current behavior XX is identified if an elemental behavior B, an elemental behavior A, an elemental behavior P, and an elemental behavior J are performed in this order. For example, the current behavior XX is a "behavior with interest in product A", the elemental behavior B is "stop", the elemental behavior A is "look at product A", the elemental behavior P is "take product A in hand", and the elemental behavior J is "put product A in basket", or the like.

Furthermore, each of the elemental behaviors is associated with a basic action and a facial expression. For example, as for the elemental behavior B, the basic action is defined such that "as a time series pattern in a period from a time t1 to a time t3, a basic action of a whole body changes to basic actions 02, 03, and 03, a basic action of a right arm changes to basic actions 27, 25, and 25, and a basic action of a face changes to basic actions 48, 48, and 48", and the facial expression is defined such that "as a time series pattern in the period from the time t1 to the time t3, a facial expression H continues".

Meanwhile, the representation, such as the basic action 02, that is a representation using an identifier for identifying each of the basic actions is used for convenience of explanation, and corresponds to, for example, stop, arm raising, squat, or the like. Similarly, the representation, such as the facial expression H, that is a representation using an identifier for identifying each of the facial expressions is used for convenience of explanation, and corresponds to, for example, a smile, an angry face, or the like. While the higher-level behavior identification rule 27 is generated by the control unit 30 to be described later, it may be possible to use data that is generated in advance.

The behavior prediction model 28 is one example of a machine learning model for predicting a future behavior or a future state of a person through Bayesian inference using the basic action and the facial expression information. Specifically, the behavior prediction model 28 predicts, as Bayesian inference, a future behavior or a future state of a person by using a Bayesian network that is one example of a graphical model that represents a causal relationship between variables.

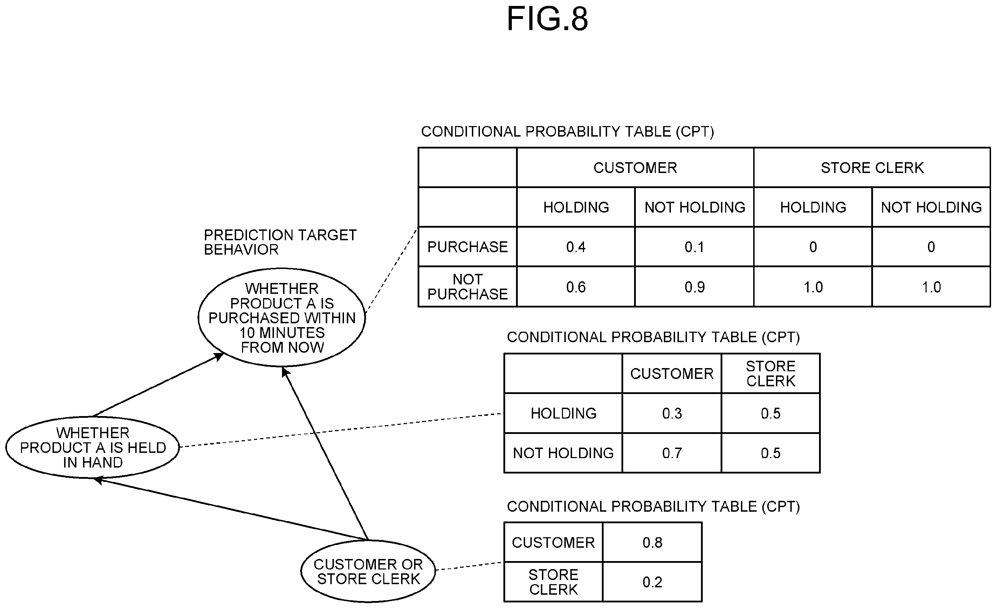

FIG. 8 is a diagram illustrating an example of the behavior prediction model 28. As illustrated in FIG. 8, the behavior prediction model 28 preforms prediction by using the Bayesian network that is a kind of a graphical model in which a structure of a probability model is written in a visually and easily understandable manner and that visualizes dependencies between a plurality of variables by probabilistic reasoning.

Here, in the Bayesian network, variables are represented by a directed acyclic graph, each of the variables is referred to as a node, nodes are connected by a link, a node located at a source of a link is referred to as a parent node, and a node located at a destination of the link is referred to as a child node, for example. Each of the nodes in the Bayesian network corresponds to a purpose or a behavior, a value of each of the nodes is a random variable, and each of the nodes has, as quantitative information, a conditional probability table (CPT) using a probability that is calculated by the Bayesian inference.

The Bayesian network illustrated in FIG. 8 includes a node of "customer or store clerk", a node of "whether product A is held in hand", and a node of "whether product A is purchased within ten minutes from now", and each of the nodes has the CPT. In the node of "customer or store clerk", the probability that a situation of the "customer" occurs is 80%, and the probability that a situation of the "store clerk" occurs is 20%. In the node of "whether product A is held in hand", in the case of the "customer", the probability that a situation of "holding" occurs is 30% and the probability that a situation of "not holding" occurs is 70 %, and, in the case of the "store clerk", the probability that a situation of "holding "occurs is 50% and the probability that a situation of "not holding" occurs is 50%.

In this manner, the probability of the child node is determined only by a prior probability that is determined in advance and the probability of the parent node. Further, because of the conditional probability, if the probability of a certain node is changed, the probability of another node that is connected to the certain node by a link is also changed. With use of the characteristics as described above, the behavior prediction is performed using the Bayesian network (the behavior prediction model 28). While the behavior prediction model 28 is generated by the control unit 30 to be described later, it may be possible to use a Bayesian network that is generated in advance.

Referring back to FIG. 4, the control unit 30 is a processing unit that controls the entire information processing apparatus 10, and is implemented by, for example, a processor or the like. The control unit 30 includes a pre-processing unit 40 and an operation processing unit 50. Meanwhile, the pre-processing unit 40 and the operation processing unit 50 are implemented by an electronic circuit included in the processor, a process performed by the processor, or the like.

### Pre-processing unit 40

The pre-processing unit 40 is a processing unit that generates each of the models, the rules, and the like by using the training data stored in the storage unit 20, before operation of the behavior prediction. The pre-processing unit 40 includes a graph generation unit 41, a skeleton recognition model generation unit 42, a facial expression recognition model generation unit 43, a rule generation unit 44, and a behavior prediction model generation unit 45.

### Generation of scene graph

The graph generation unit 41 is a processing unit that generates a scene graph stored in the graph data DB 23. Specifically, the graph generation unit 41 generates a scene graph that represents a relationship between a person and another person or a scene graph that represents a relationship between a person and an object, by using a recognition model that performs person recognition or object recognition with respect to image data.

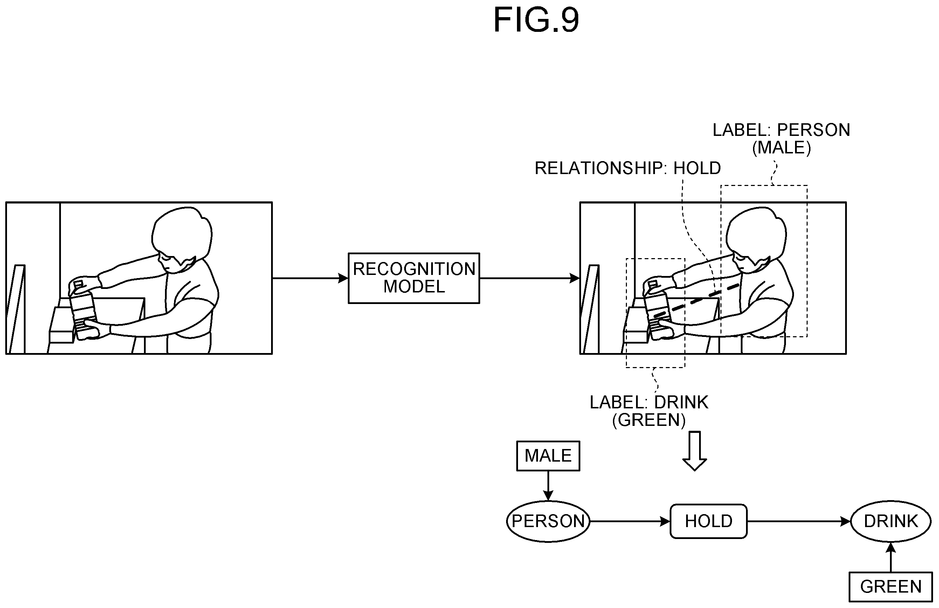

FIG. 9 is a diagram for explaining an example of generation of the scene graph that represents a relationship between a person and an object. As illustrated in FIG. 9, the graph generation unit 41 inputs image data to the recognition model, and acquires, as an output result of the recognition model, a label of a "person (male)", a label of "drink (green)", and a relationship of "hold". As a result, the graph generation unit 41 generates a scene graph in which the node of the "person" with the attribute of "male" has a relationship of "hold" with respect to the node of "drink" with the attribute of "green".

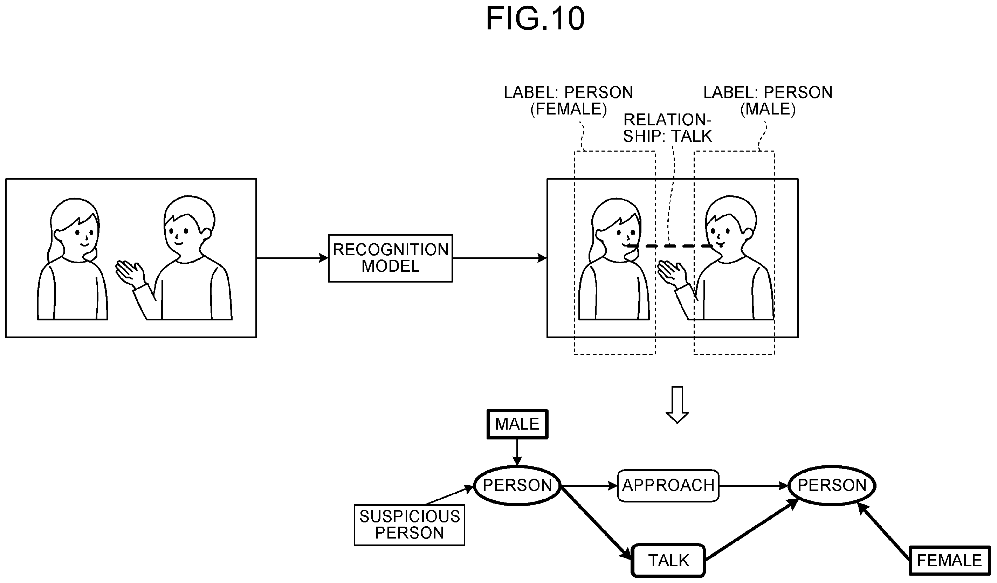

FIG. 10 is a diagram for explaining an example of generation of a scene graph that represents a relationship between a person and another person. As illustrated in FIG. 10, the graph generation unit 41 inputs image data to the recognition model, and acquires, as an output result of the recognition model, a label of a "person (male)", a label of a "person (female)", and a relationship of "talk". In other words, the graph generation unit 41 acquires the fact that "male is talking to female". As a result, the graph generation unit 41 adds the relationship of "talk" of the node of the "person" with the attribute of the "male" with respect to the node of the "person" with the attribute of the "female" to a scene graph in which a node of a "person" with an attribute of a "suspicious person" has a relationship of "approach" with respect to a node of a "person" with an attribute of a "female".

Meanwhile, generation of the scene graph is only one example, and it may be possible to use a different method or it may be possible to generate the scene graph manually by an administrator or the like.

### Generation of skeleton recognition model 24

The skeleton recognition model generation unit 42 is a processing unit that generates the skeleton recognition model 24 by using training data. Specifically, the skeleton recognition model generation unit 42 generates the skeleton recognition model 24 by supervised learning using training data to which the correct answer information (label) is added.

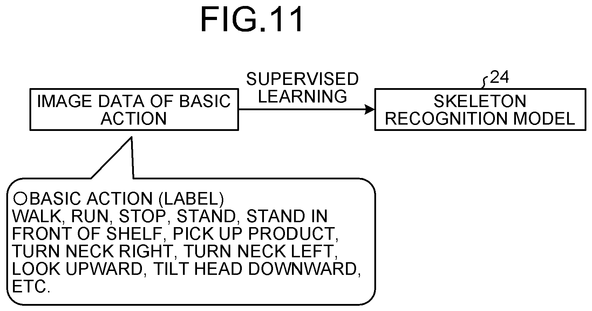

FIG. 11 is a diagram for explaining generation of the skeleton recognition model 24. As illustrated in FIG. 11, the skeleton recognition model generation unit 42 inputs image data of a basic action, to which a label of a basic action is added, to the skeleton recognition model 24, and performs machine learning for the skeleton recognition model 24 such that an error between an output result of the skeleton recognition model 24 and the label is reduced. For example, the skeleton recognition model 24 is a neural network. The skeleton recognition model generation unit 42 performs machine learning for the skeleton recognition model 24, and changes a parameter of the neural network. The skeleton recognition model 24 inputs an explanatory variable that is image data (for example, image data of a person who is performing the basic action) to the neural network. Then, the skeleton recognition model 24 generates a machine learning model in which a parameter of the neural network is changed such that an error between an output result that is output by the neural network and the correct answer data that is the label of the basic action is reduced.

Meanwhile, it is possible to use, as the training data, each piece of image data to which "walk", "run", "stop", "stand", "stand in front of shelf", "pick up product", "turn neck right", "turn neck left", "look upward", "tilt head downward", or the like is added as the "label". Meanwhile, generation of the skeleton recognition model 24 is only one example, and it may be possible to use a different method. Further, behavior recognition as disclosed in Japanese Laid-open Patent Publication No. 2020-71665 and Japanese Laid-open Patent Publication No. 2020-77343 may be used as the skeleton recognition model 24.

### Generation of facial expression recognition model 25

The facial expression recognition model generation unit 43 is a processing unit that generates the facial expression recognition model 25 by using training data. Specifically, the facial expression recognition model generation unit 43 generates the facial expression recognition model 25 by supervised learning using training data to which correct answer information (label) is added.

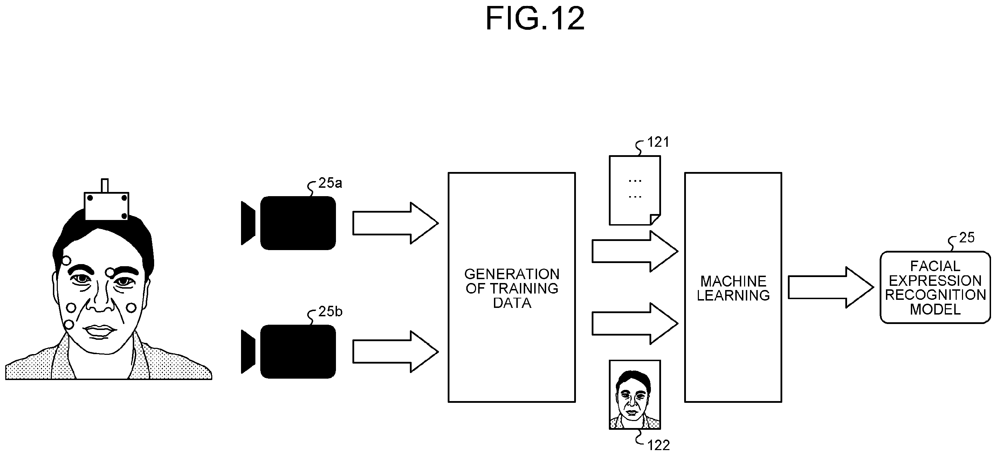

Generation of the facial expression recognition model 25 will be described below with reference to FIG. 12 to FIG. 14. FIG. 12 is a diagram for explaining an example of generation of the facial expression recognition model 25. As illustrated in FIG. 12, the facial expression recognition model generation unit 43 generates training data and performs machine learning with respect to image data that is captured by each of a red-green-blue (RGB) camera 25a and an infrared (IR) camera 25b.

As illustrated in FIG. 12, first, the RGB camera 25a and the IR camera 25b are oriented toward a face of a person to which markers are added. For example, the RGB camera 25a is a general digital camera that receives visible light and generates an image. Further, for example, the IR camera 25b senses infrared. Furthermore, the markers are, for example, IR reflection (recursive reflection) markers. The IR camera 25b is able to perform motion capture by using IR reflection by the markers. Moreover, in the following description, a person as an image capturing target will be referred to as a subject.

In a training data generation process, the facial expression recognition model generation unit 43 acquires image data that is captured by the RGB camera 25a and a result of the motion capture that is performed by the IR camera 25b. Further, the facial expression recognition model generation unit 43 generates AU occurrence strength 121 and image data 122 by removing the markers from the captured image data by image processing. For example, the occurrence strength 121 may be data which represents the occurrence strength of each of the AUs by five-grade evaluation using A to E, and to which annotation such as "AU1: 2, AU2: 5, AU4: 1, ..." is added.

In a machine learning process, the facial expression recognition model generation unit 43 performs machine learning by using the image data 122 and the AU occurrence strength 121 that are output through the training data generation process, and generates the facial expression recognition model 25 for estimating the AU occurrence strength from the image data. The facial expression recognition model generation unit 43 is able to use the AU occurrence strength as a label.

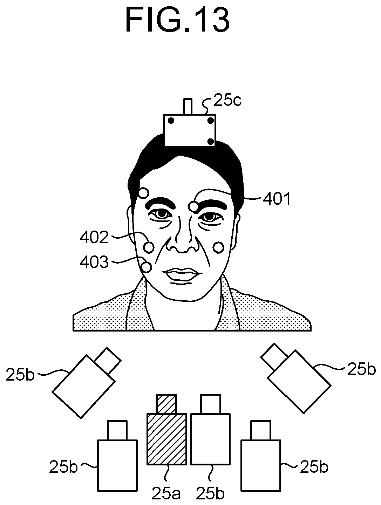

Arrangement of the cameras will be described below with reference to FIG. 13. FIG. 13 is a diagram illustrating an example of arrangement of the cameras. As illustrated in FIG. 13, the plurality of IR cameras 25b may constitute a marker tracking system. In this case, the marker tracking system is able to detect positions of the IR reflection markers by stereo imaging. Further, it is assumed that relative positional relationships among the plurality of IR cameras 25b are corrected in advance by camera calibration.

Furthermore, a plurality of markers are attached so as to cover the AU1 to the AU28 on a face of the subject to be captured. Positions of the markers are changed in accordance with a change of a facial expression of the subject. For example, a marker 401 is arranged in the vicinity of an inner corner of an eyebrow. A marker 402 and a marker 403 are arranged in the vicinity of a nasolabial fold. The markers may be arranged on a skin corresponding to one or more of the AUs and motion of facial muscles. Moreover, the markers may be arranged so as to avoid a skin on which a texture is largely changed due to wrinkle or the like.

Furthermore, the subject wears an instrument 25c to which a reference point marker is attached, on the outside of the face contour. It is assumed that a position of the reference point marker attached to the instrument 25c does not change even if the facial expression of the subject changes. Therefore, the facial expression recognition model generation unit 43 is able to detect a change in the positions of the markers attached to the face, in accordance with a change in a relative position with respect to the reference point marker. Moreover, by providing three or more reference markers, the facial expression recognition model generation unit 43 is able to identify the positions of the markers in a three-dimensional space.

The instrument 25c is, for example, a head band. Further, the instrument 25c may be a virtual reality (VR) head set, a mask made of a hard material, or the like. In this case, the facial expression recognition model generation unit 43 is able to use a rigid surface of the instrument 25c as the reference point marker.

Meanwhile, when the IR camera 25b and the RGB camera 25a capture images, the subject continuously changes the facial expression. Therefore, it is possible to acquire, as an image, how the facial expression changes in chronological order. Furthermore, the RGB camera 25a may capture moving images. The moving image can be regarded as a plurality of still images that are arranged in chronological order. Moreover, the subject may freely change the facial expression or may change the facial expression according to a scenario that is determined in advance.

Meanwhile, it is possible to determine the AU occurrence strength by movement amounts of the markers. Specifically, the facial expression recognition model generation unit 43 is able to determine the occurrence strength on the basis of the movement amounts of the markers that are calculated based on distances between a certain position that is set in advance as a determination criterion and the positions of the markers.

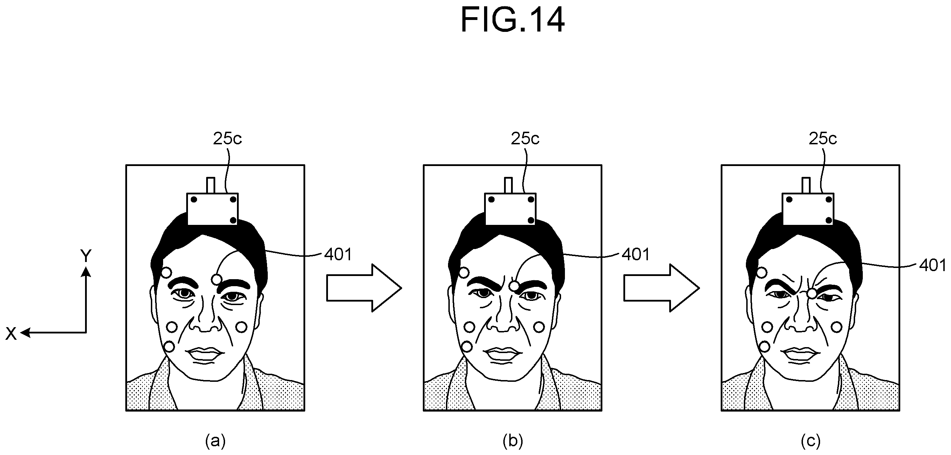

The movement of the markers will be described below with reference to FIG. 14. FIG. 14 is a diagram for explaining movement of the markers. FIG. 14(a), (b), and (c) are images that are captured by the RGB camera 25a. Further, it is assumed that the images in (a), (b), and (c) are captured in this order. For example, (a) represents an image that is obtained when the subject has an expressionless face. The facial expression recognition model generation unit 43 is able to regard the positions of the markers in the image (a) as reference positions at which the movement amounts are zero. As illustrated in FIG. 13, the subject has a facial expression in which the eyebrows are knitted. In this case, the position of the marker 401 moves downward along with a change in the facial expression. At this time, a distance between the position of the marker 401 and the reference marker attached to the instrument 25c is increased.

In this manner, the facial expression recognition model generation unit 43 identifies image data in which a certain facial expression of the subject appears, and strength of each of the markers at the time of the facial expression, and generates training data with an explanatory variable of "image data" and an objective variable of "strength of each of the markers". Further, the facial expression recognition model generation unit 43 generates the facial expression recognition model 25 through supervised learning using the generated training data. For example, the facial expression recognition model 25 is a neural network. The facial expression recognition model generation unit 43 performs machine learning for the facial expression recognition model 25, and changes a parameter of the neural network. The facial expression recognition model 25 inputs the explanatory variable to the neural network. Then, the facial expression recognition model 25 generates a machine learning model in which a parameter of the neural network is changed such that an error between an output result that is output by the neural network and the correct answer data that is the objective variable is reduced.

Meanwhile, generation of the facial expression recognition model 25 is only one example, and it may be possible to use a different method. Further, behavior recognition as disclosed in Japanese Laid-open Patent Publication No. 2021-111114 may be used as the facial expression recognition model 25.

### Generation of higher-level behavior identification rule 27

Referring back to FIG. 4, the rule generation unit 44 is a processing unit that generates the higher-level behavior identification rule 27 by using a past history or the like. Specifically, the rule generation unit 44 identifies, from various kinds of past video data, changes of actions and facial expressions before a person performs a certain behavior, and generates the higher-level behavior identification rule 27.

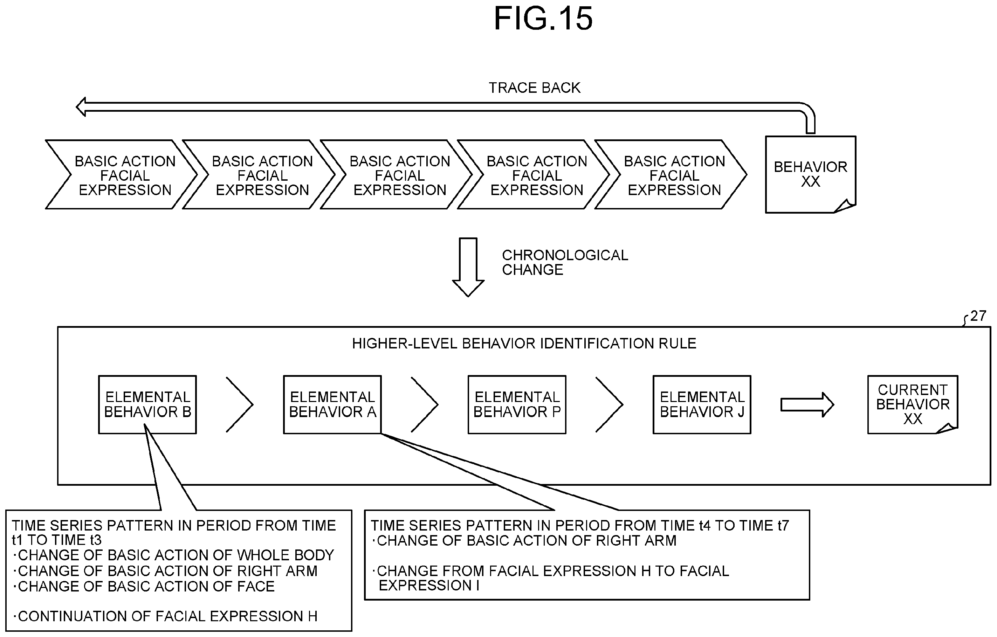

FIG. 15 is a diagram for explaining an example of generation of the higher-level behavior identification rule. As illustrated in FIG. 15, the rule generation unit 44 extracts a plurality of pieces of past image data, which are acquired before a certain piece of image data in which a certain behavior XX is performed, by tracing back the data for a predetermined time from the certain image data. Then, the rule generation unit 44 detects basic actions and facial expressions by using a trained model, an image analysis, or the like with respect to each piece of the past image data that are acquired by trace back.

Thereafter, the rule generation unit 44 identifies changes of the elemental behaviors (changes of the basic actions and changes of the facial expressions) that are detected before the behavior XX. For example, the rule generation unit 44 identifies, as the elemental behavior B, "a change of the basic action of the whole body, a change of the basic action of the right arm, and a change of the basic action of the face in the period from the time t1 to the time t3" and "continuation of the facial expression H in the period from the time t1 to the time t3". Furthermore, the rule generation unit 44 identifies, as the elemental behavior A, "a change of the basic action of the right arm and a change from the facial expression H to the facial expression I in a period from a time t4 to a time t7".

In this manner, the rule generation unit 44 identifies, as the change of the elemental behaviors before the behavior XX, the sequence of the elemental behavior B, the elemental behavior A, the elemental behavior P, and the elemental behavior J in this order. Further, the rule generation unit 44 generates the higher-level behavior identification rule 27 in which the "behavior XX" and "changes to the elemental behavior B, the elemental behavior A, the elemental behavior P, and the elemental behavior J" are associated, and stores the generated higher-level behavior identification rule 27 in the storage unit 20.

Meanwhile, generation of the higher-level behavior identification rule 27 is only one example, and it may be possible to use a different method or it may be possible to generate the higher-level behavior identification rule 27 manually by an administrator or the like.

### Generation of behavior prediction model 28

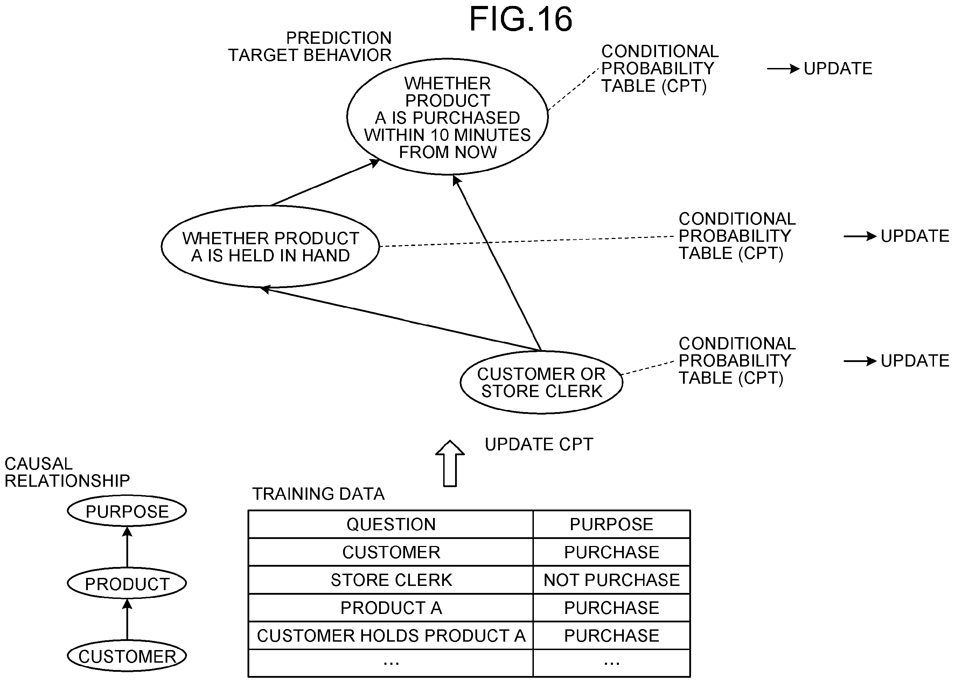

The behavior prediction model generation unit 45 is a processing unit that generates the behavior prediction model 28 by using training data. FIG. 16 is a diagram for explaining an example of generation of a Bayesian network that is the behavior prediction model 28. As illustrated in FIG. 16, the behavior prediction model generation unit 45 acquires training data ("question" and "purpose") that is generated by aggregating past events, past experiences, or the like. Here, a causal relationship as illustrated in FIG. 16 is set in advance between a customer, a product, and a purpose.

In this state, the behavior prediction model generation unit 45 constructs the Bayesian network that includes a node of "customer or store clerk", a node of "whether product A is held in hand", and a node of "whether product A is purchased within ten minutes from now", which corresponds to a prediction target behavior that is a purpose, and performs training of the Bayesian network for updating the CPT of each of the nodes by using the training data.

For example, the behavior prediction model generation unit 45 inputs training data of "customer, purchase", "store clerk, not purchase", "product A, purchase", and "customer holds product A, purchase" to the Bayesian network, updates the CPT of each of the nodes by the Bayesian inference, and performs training of the Bayesian network. In this manner, the behavior prediction model generation unit 45 generates the behavior prediction model 28 by training the Bayesian network through training using actual performance. Meanwhile, it is possible to various well-known methods to train the Bayesian network.

Furthermore, it is not necessary to always use the Bayesian network as the behavior prediction model 28, but a neural network or the like may be used. In this case, the behavior prediction model generation unit 45 performs machine learning for the neural network by using "current behavior and facial expression" as explanatory variables and "whether product is purchased" as an objective variable. In this case, the behavior prediction model generation unit 45 may perform machine learning by inputting the "current behavior" and the "facial expression", which are the explanatory variables, to different layers. For example, the behavior prediction model generation unit 45 may input an important explanatory variable to a latter layer among a plurality of hidden layers as compared to other explanatory variables to perform machine learning such that a feature value of the important explanatory variable is further compressed and valued.

Incidentally, details set as the explanatory variables are mere examples, and setting may be changed arbitrarily depending on a target behavior or a target state. Furthermore, the neural network is only one example, and it may be possible to adopt a convolutional neural network, a deep neural network (DNN), or the like.

### Operation processing unit 50

Referring back to FIG. 4, the operation processing unit 50 is a processing unit that includes an acquisition unit 51, a relationship identification unit 52, a behavior identification unit 53, and a behavior prediction unit 54, and performs a behavior prediction process of predicting a future behavior of a person who appears in the video data, by using each of the models and each of the rules that are prepared by the pre-processing unit 40 in advance.

The acquisition unit 51 is a processing unit that acquires video data from each of the cameras 2 and stores the video data in the video data DB 21. For example, the acquisition unit 51 may acquire the video data from each of the cameras 2 on an as-needed basis or in a periodic manner.

### Identification of relationship

The relationship identification unit 52 is a processing unit that performs a relationship identification process of identifying a relationship between a person and another person who appear in the video data or a relationship between a person and an object that appear in the video data, in accordance with the scene graph stored in the graph data DB 23. Specifically, the relationship identification unit 52 identifies, for each of frames included in the video data, a type of a person or a type of an object that appears in the frame, and identifies a relationship by searching for the scene graph by using each piece of the identified information. Then, the relationship identification unit 52 outputs the identified relationship to the behavior prediction unit 54.

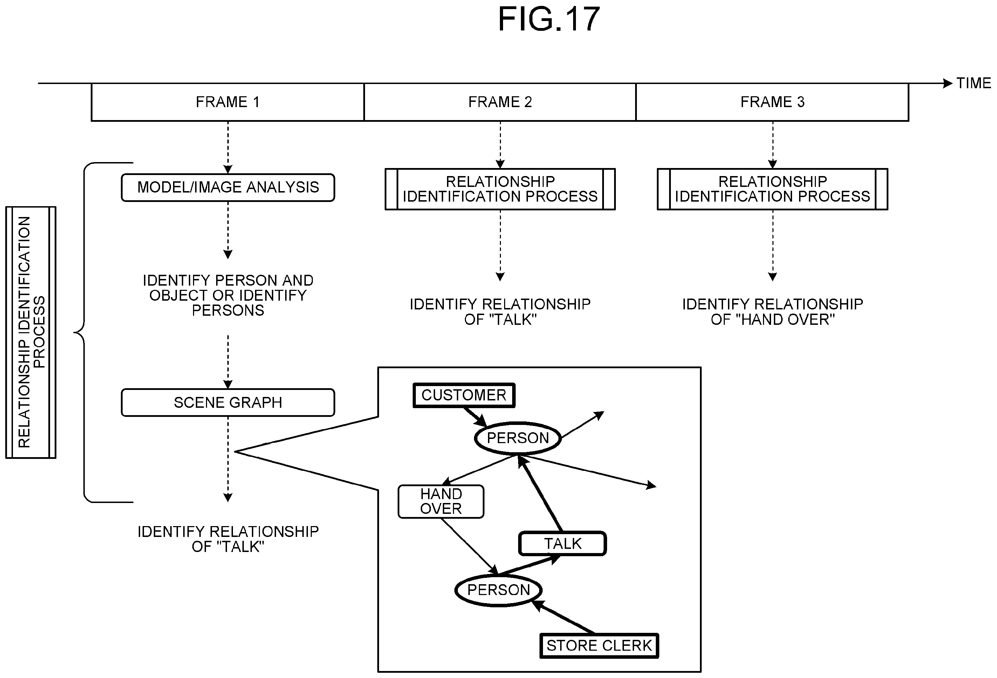

FIG. 17 is a diagram for explaining identification of a relationship. As illustrated in FIG. 17, the relationship identification unit 52 identifies, with respect to a frame 1, a type of a person, a type of an object, the number of persons in the frame 1, in accordance with a result that is obtained by inputting the frame 1 to a machine learning model that has been subjected to machine learning or a well-known image analysis on the frame 1. For example, the relationship identification unit 52 identifies "person (customer)" and a "person (store clerk)" as types of persons. Thereafter, the relationship identification unit 52 identifies a relationship of "store clerk talks with customer" between the node of the "person" with the attribute of the "customer" and the node of the "person" with the attribute of the "store clerk". performs the relationship identification process as described above on each of the subsequent frames, such as a frame 2 and a frame 3, and identifies a relationship of "talk", a relationship of "hand over", or the like for each of the frames.

### Identification of current behavior

The behavior identification unit 53 is a processing unit that identifies a current behavior of a person from video data. Specifically, the behavior identification unit 53 acquires the skeleton information on each of parts of a person by using the skeleton recognition model 24 and identifies a facial expression of the person by using the facial expression recognition model 25, for each of the frames in the video data. Then, the behavior identification unit 53 identifies a behavior of the person by using the skeleton information on each of the parts of the person and the facial expression of the person that are identified for each of the frames, and outputs the identified behavior of the person to the behavior prediction unit 54.

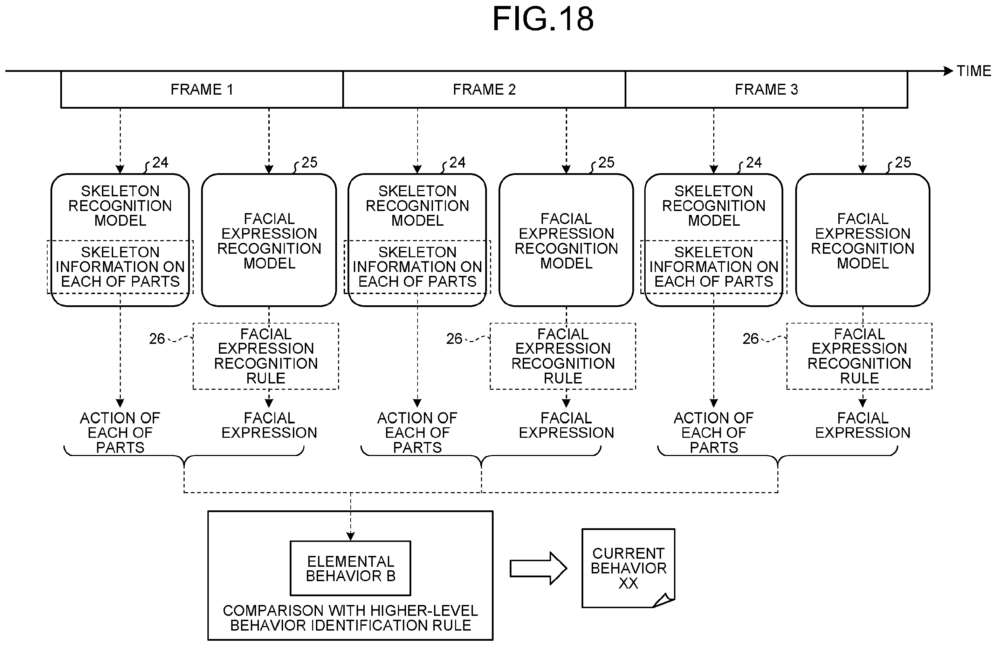

FIG. 18 is a diagram for explaining a specific example of identification of a current behavior of a person. As illustrated in FIG. 18, the behavior identification unit 53 inputs the frame 1 that is image data to the skeleton recognition model 24 and the facial expression recognition model 25. The skeleton recognition model 24 generates the skeleton information on each of the parts in accordance with input of the frame 1, and outputs an action of each of the parts in accordance with the skeleton information on each of the parts. For example, the behavior identification unit 53 is able to acquire action information on each of the parts, such as "face: facing front, arm: raise, leg: walk, ...", by using the skeleton recognition model 24. Further, the facial expression recognition model 25 outputs, as a facial expression recognition result, the occurrence strength, such as "AU1: 2, AU2: 5, AU4: 1, ...", of each of the AUs, i.e., the AU1 to the AU28, in accordance with input of the frame 1. Furthermore, the behavior identification unit 53 checks the facial expression recognition result with the facial expression recognition rule 26, and identifies a facial expression of "smile" or the like.

The behavior identification unit 53 performs the identification process as described above on each of the subsequent frames, such as the frame 2 and the frame 3, and identifies the action information on each of the parts of the person and the facial expression on the person who appears in the frame, for each of the frames.

Moreover, the behavior identification unit 53 performs the identification process as described above on each of the frames, and identifies a change of the action of each of the parts of the person and a change of the facial expression. Thereafter, the behavior identification unit 53 compares the change of the action of each of the parts of the person and the change of the facial expression with each of the elemental behaviors in the higher-level behavior identification rule 27, and identifies the elemental behavior B.

Furthermore, the behavior identification unit 53 repeats the identification of the elemental behavior from the video data, and identifies a change of the elemental behaviors. Then, the behavior identification unit 53 compares the change of the elemental behaviors and the higher-level behavior identification rule 27, and identifies the current behavior XX of

While the example has been described in the example illustrated in FIG. 18 in which both of the action of each of the parts and the facial expression are identified for each of the frames, embodiments are not limited to this example. For example, the facial expression of the person is affected by a change of an internal state of the person, and therefore, a facial expression that appears when a certain behavior is performed does not always coincide with a facial expression that represents the internal state at the time of the behavior. In other words, when the facial expression changes after a certain behavior is performed, it is often the case that the facial expressions are different before and after the certain behavior is performed. To cope with this, the behavior identification unit 53 is able to identify a facial expression by using a different frame from the frame that is used to identify the action of each of the parts.

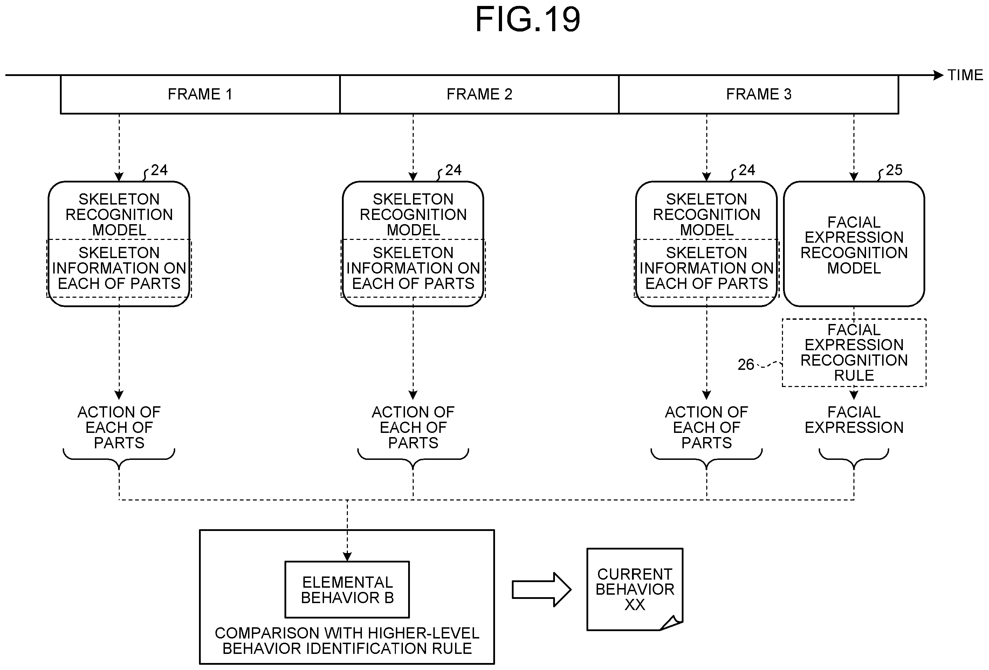

FIG. 19 is a diagram for explaining another example of identification of a current behavior of a person. In FIG. 19, an example will be described in which actions are identified for each of the frames by adopting the frame 1, the frame 2, and the frame 3 as a single processing unit, and facial expression recognition is performed in the latest frame (the frame 3 in this example). As illustrated in FIG. 19, similarly to FIG. 18, the behavior identification unit 53 performs skeleton recognition using the skeleton recognition model 24 on the frame 1, the frame 2, and the frame 3, and identifies the action of each of the parts for each of the frames. Further, the behavior identification unit 53 inputs the frame 3 to the facial expression recognition model 25 and identifies the facial expression of the person.

Thereafter, similarly to FIG. 18, the behavior identification unit 53 identifies the elemental behavior and identifies the current behavior. Meanwhile, the examples described above are mere examples, and therefore, the behavior identification unit 53 may identify the action of each of the parts for each of the frames and recognizes the facial expression by using the first frame. Further, the behavior identification unit 53 may identify the action for each of the frames and, with respect to the facial expression recognition, may identify facial expressions or a change of facial expressions that may be observed between the frames, by using the plurality of frames (the frame 1 to the frame 3 in FIG. 19).

### Prediction of future behavior

The behavior prediction unit 54 is a processing unit that predicts a future behavior of a person by using the current behavior of the person and the relationship. Specifically, the behavior prediction unit 54 inputs the relationship that is identified by the relationship identification unit 52 and the current behavior of the person that is identified by the behavior identification unit 53 to the behavior prediction model 28, and predicts a future behavior of the person. Further, the behavior prediction unit 54 transmits a prediction result to a terminal of an administrator or displays the prediction result on a display or the like.

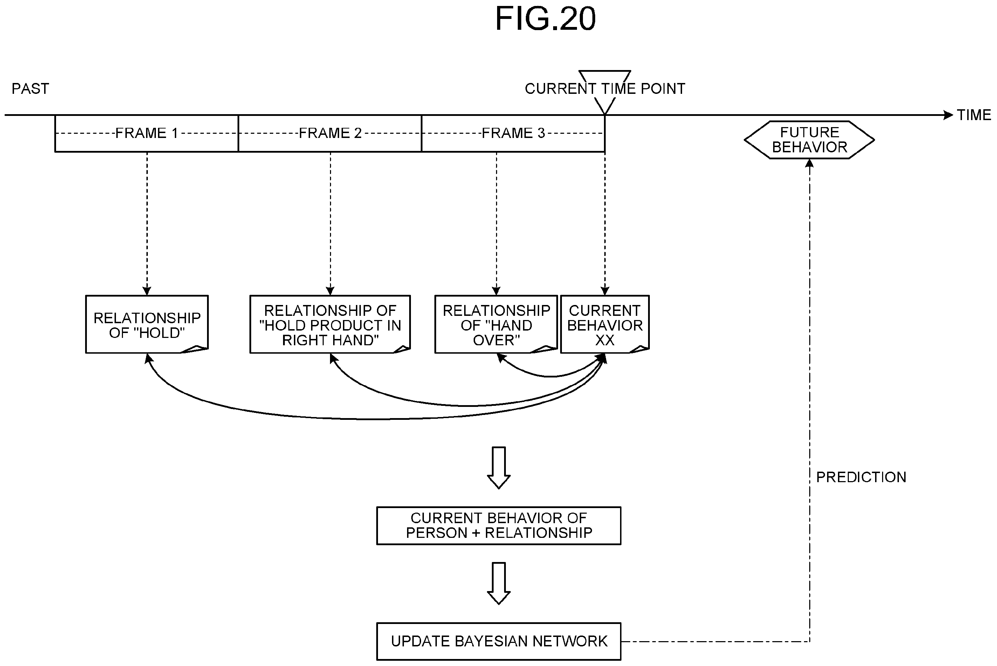

FIG. 20 is a diagram for explaining prediction of a behavior of a person. As illustrated in FIG. 20, the behavior prediction unit 54 acquires, at the time of the frame 1, a relationship of "hold" that is identified at the same time point, acquires, at the time of the frame 2, a relationship of "hold product in right hand" that is identified at the same time point, and acquires, at the time point of the frame 3, the relationship of "hold" that is identified at the same time point and the current behavior XX. Then, the behavior prediction unit 54 updates the Bayesian network by using the latest relationship and the current behavior XX, and predicts a behavior of the person.

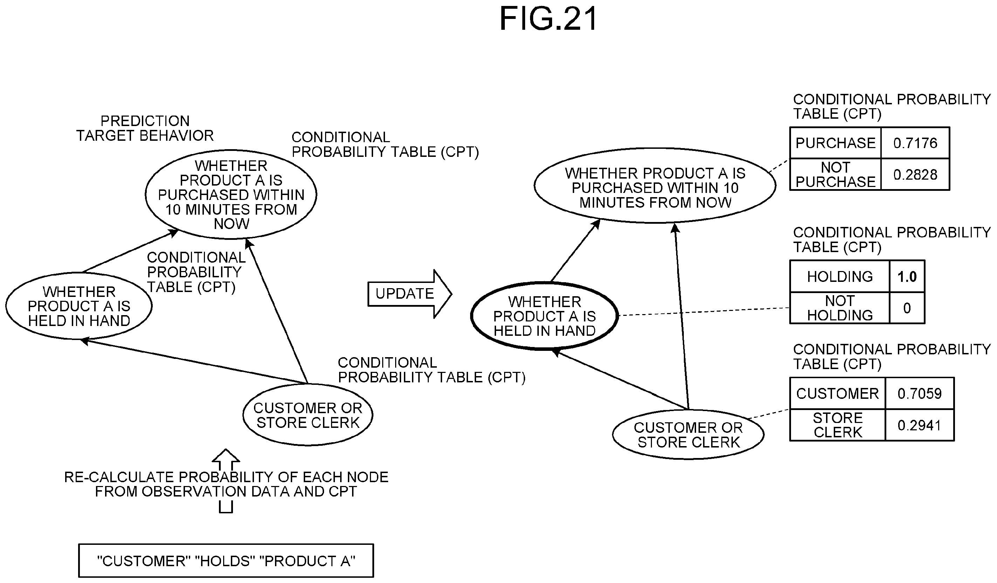

FIG. 21 is a diagram for explaining prediction of a behavior of a person using the Bayesian network. As illustrated in FIG. 21, if observation data of "person (customer) holds product A" is identified as the relationship and the current behavior of the person, the behavior prediction unit 54 re-calculates the probability of each of the nodes from the observation data and the CPT. Here, the probability is bi-directionally updated due to the influence of the nodes that are determined from the observation data. Further, a node that is not determined from the observation data may be included. In the example illustrated in FIG. 21, it is determined that the product A is held, from the observation data.

As a result, the behavior prediction unit 54 calculates a probability of (customer: 0.7059, store clerk: 0.2941) for the node of "customer or store clerk", a probability of (customer: 1.0, store clerk: 0) for the node of "whether product A is held in hand", and a probability of (purchase: 0.7276, not purchase: 0.2824) for the node of "whether product A is purchased within ten minutes from now".

Then, the behavior prediction unit 54 selects the "customer", the "hold", and the "purchase" that are options with higher probabilities in the respective nodes, and finally predicts "product A is purchased" as prediction of the behavior of the person. Meanwhile, as for the CPTs of the Bayesian network in FIG. 20 and FIG. 21, the CPTs illustrated in FIG. 8 are omitted for convenience of explanation, but the CPTs are the same information.

Furthermore, while the example has been explained in FIG. 20 in which the behavior prediction unit 54 performs the behavior prediction by using the current behavior and the latest facial expression, but embodiments are not limited to this example. As described above, the facial expression of the person is largely affected by a change of the internal state of the person, and therefore, a latest behavior does not always represent a current facial expression. Therefore, as illustrated in FIG. 20, the behavior prediction unit 54 may perform the behavior prediction by using the current behavior that is identified from the latest frame 3 and at least one of relationships that are recognized before the frame 3 or a change of the relationships from the frame 1 to the frame 3.

In this case, if the current behavior is identified by a first frame that is one example of image data at a certain time, and if the relationship is identified by a second frame, the behavior prediction unit 54 determines whether the second frame is detected in a certain range corresponding to a certain number of frames or a certain period of time that is set in advance from the time point at which the first frame is detected. Then, if the behavior prediction unit 54 determines that the second frame is detected in the certain range that is set in advance, the behavior prediction unit 54 predicts a future behavior or a future state of the person on the basis of the behavior of the person included in the first frame and the relationship included in the second frame.

In other words, the behavior prediction unit 54 predicts a future behavior or a future state of the person by using a current behavior and a relationship that are detected at certain times that are close to each other to some extent. Meanwhile, the range that is set in advance may be set arbitrarily, and either of the current behavior and the relationship may be identified first.

### Flow of Process

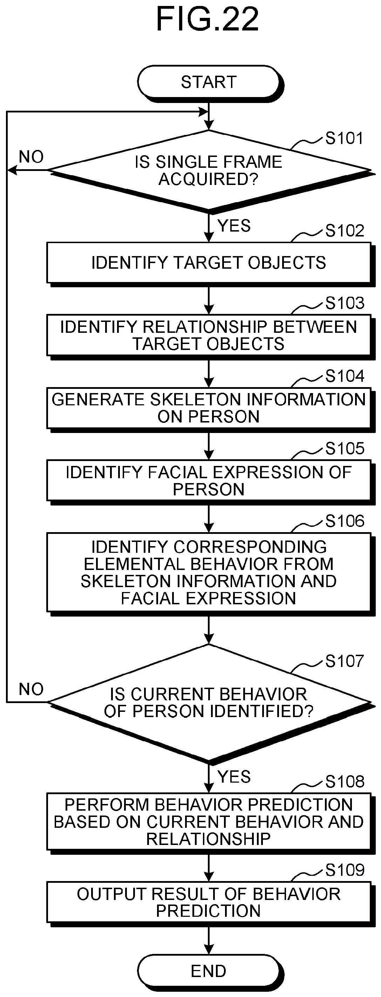

FIG. 22 is a flowchart illustrating the flow of the behavior prediction process. Meanwhile, in this example, it is assumed that pre-processing is already completed. As illustrated in FIG. 22, if the operation processing unit 50 acquires a single frame (S101: Yes), the operation processing unit 50 identifies target objects that appear in the frame through an image analysis or the like (S102). Subsequently, the operation processing unit 25 searches for a scene graph stored in the graph data DB 23 by using the identified target objects, and identifies a relationship between the target objects (S103).

Then, the operation processing unit 50 inputs the frame to the skeleton recognition model 24, and acquires the skeleton information on the person, which indicates an action of each of the parts, for example (S104). Meanwhile, if a person does not appear in the frame at S103, the operation processing unit 50 omits S104.

Further, the operation processing unit 50 inputs the frame to the facial expression recognition model 25, and identifies a facial expression of the person from the output result and the facial expression recognition rule 26 (S105). Meanwhile, if a person does not appear in the frame at S103, the operation processing unit 50 omits S105.

Thereafter, the operation processing unit 50 identifies an elemental behavior from the higher-level behavior identification rule 27 by using the skeleton information on the person and the facial expression of the person (S106). Here, if the current behavior of the person is not identified (S107: No), the operation processing unit 50 repeats the process from S101 with respect to a next frame.

In contrast, if the current behavior of the person is identified (S107: Yes), the operation processing unit 50 updates the Bayesian network by using the current behavior and the identified relationship, and predicts a future behavior of the person (S108). Thereafter, the operation processing unit 50 outputs a result of the behavior prediction (S109).

### Specific Examples

Specific examples of solutions that contribute to achievement of a safe and secure society using the behavior prediction performed by the information processing apparatus 10 as described above will be described below. Here, a solution using a relationship between a person and an object and a solution using a relationship between a person and another person will be described.

### Solution using relationship between person and object

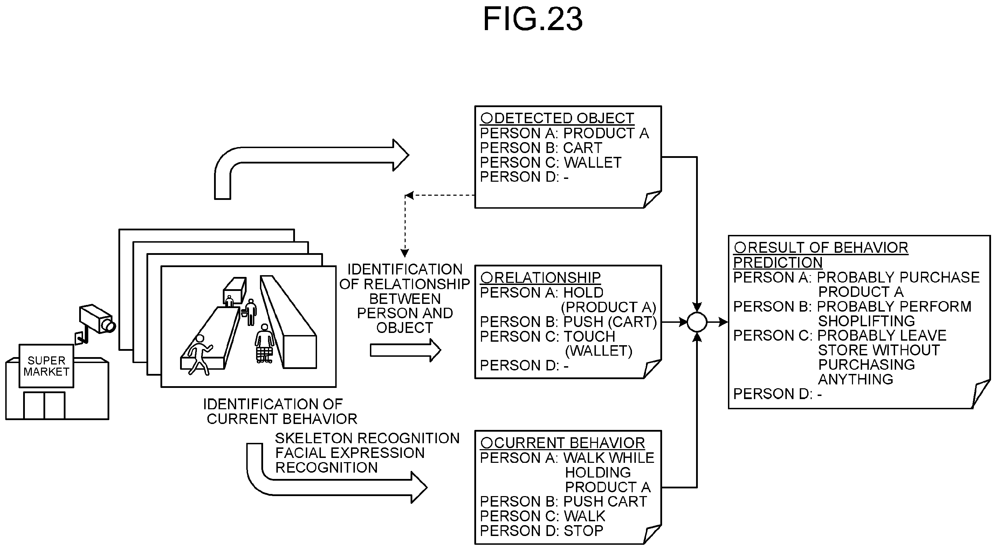

FIG. 23 is a diagram for explaining an example of a solution to which the behavior prediction related to a person and an object is applied. In FIG. 23, an example of the behavior prediction using video data that is captured by a monitoring camera installed in a supermarket or the like will be described. Meanwhile, processes described below are performed on a single frame or a plurality of frames in a single piece of video data.

As illustrated in FIG. 23, the information processing apparatus 10 detects, from a frame in the video data, a person A and a product A, a person B and a cart, a person C and a wallet, and a person D. Then, the information processing apparatus 10 identifies "relationship of "hold" of person A with respect to product A", "relationship of "push" of person B with respect to cart", and "relationship of "touch" of person C with respect to wallet". Here, a relationship with the person D is not identified because an object is not detected.

Furthermore, the information processing apparatus 10 performs skeleton recognition using the skeleton recognition model 24 and facial expression recognition using the facial expression recognition model 25, and identifies a current behavior of the person A, such as "holding product A", a current behavior of the person B, such as "push cart", a current behavior of the person C, such as "walk", and a current behavior of the person D, such as "stop", by using recognition results.

Then, the information processing apparatus 10 performs behavior prediction using the current behaviors and the relationships, and predicts a future behavior of the person A, such as "probably purchase product A", a future behavior of the person B, such as "probably perform shoplifting", and a future behavior of the person C, such as "probably leave store without purchasing anything". Here, the person D is excluded from targets of the behavior prediction because the relationship is not identified.

In other words, the information processing apparatus 10 identifies a customer who moves in an area of a product shelf that is a predetermined area in the video data and a target product to be purchased by the customer, identifies, as the relationship, a type of a behavior (for example, watch, hold, or the like) of the customer with respect to the product, and predicts a behavior (for example, purchase, shoplifting, or the like) related to purchase of the product by the customer.

In this manner, the information processing apparatus 10 is able to use the behavior prediction as described above for an analysis of a purchase behavior, such as a behavior or a route that leads to a purchase, or a purchase marketing. Furthermore, the information processing apparatus 10 is able to detect a person, such as the person B, who is likely to commit a crime, such as shoplifting, and contribute to prevention of a crime by strengthening surveillance of the person.

Solution using relationship between person and another person

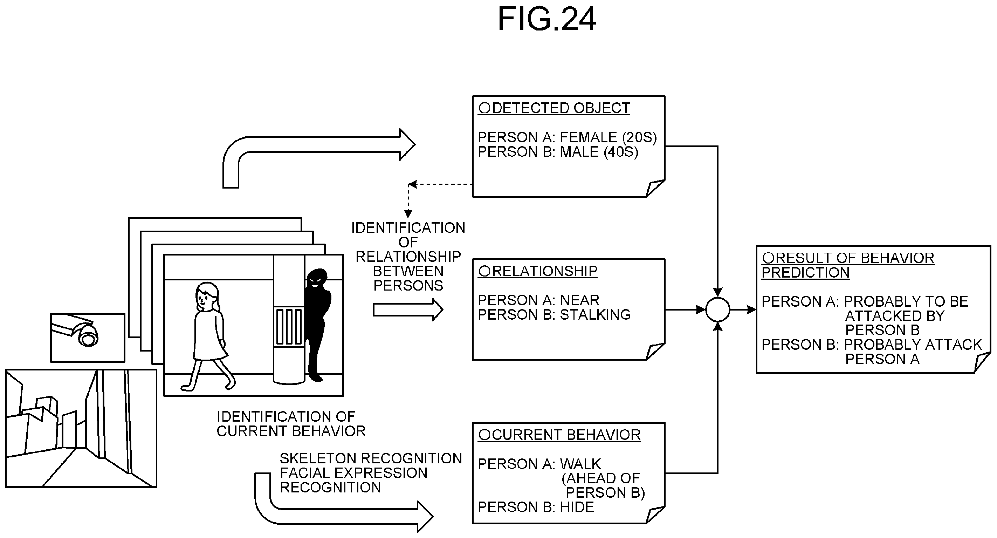

FIG. 24 is a diagram for explaining an example of a solution to which behavior prediction related to a person and another person is applied. In FIG. 24, an example of the behavior prediction using video data that is captured at night by a monitoring camera installed on a street will be described. Meanwhile, processes described below are performed on a single frame or a plurality of frames in a single piece of video data.

As illustrated in FIG. 24, the information processing apparatus 10 detects, from a frame in the video data, a person A (female: 20s) and a person B (male: 40s). Then, the information processing apparatus 10 identifies, with use of the detection result and the scene graph, "relationship of "near" of person A with respect to person B" and "relationship of "stalking" of person B with respect to person A".

Furthermore, the information processing apparatus 10 performs skeleton recognition using the skeleton recognition model 24 and facial expression recognition using the facial expression recognition model 25, and identifies a current behavior of the person A, such as "walk ahead of person B", and a current behavior of the person B, such as "hide".

Then, the information processing apparatus 10 performs behavior prediction using the current behaviors and the relationships, and predicts a future behavior of the person A, such as "probably to be attacked by person B", and a future behavior of the person B, such as "probably attack person A".

In other words, by assuming that the person A is a victim and the person B is a committer, the information processing apparatus 10 is able to predict a criminal activity of the person B with respect to the person A, from the relationship of "stalking" of the committer with respect to the victim. As a result, the information processing apparatus 10 is able to detect a place where a crime is likely to be committed through the behavior prediction as described above, and implement a countermeasure, such as calling the police or the like. Furthermore, it is possible to contribute to examination on countermeasures, such as an increase of street lights, in the place as described above.

### Effects

As described above, the information processing apparatus 10 is able to predict a sign, instead of an occurrence of an accident or a crime, so that it is possible to detect a situation in which a countermeasure is needed in advance from video data. Further, the information processing apparatus 10 is able to perform behavior prediction from video data that is captured by a general camera, such as a monitoring camera, so that the information processing apparatus 10 may be introduced into an existing system without a need of a complicated system configuration or a new apparatus. Furthermore, the information processing apparatus 10 is introduced into an existing system, so that it is possible to reduce a cost as compared to construction of a new system. Moreover, the information processing apparatus 10 is able to predict not only a simple behavior that is continued from past or current behaviors, but also a complicated behavior of a person that is not identified simply from past and current behaviors. With this configuration, the information processing apparatus 10 is able to improve prediction accuracy of a future behavior of a person.

Furthermore, the information processing apparatus 10 is able to implement the behavior prediction using twodimensional image data without using three-dimensional image data or the like, so that it is possible to increase a speed of a process, as compared to a process using a laser sensor or the like that is recently used. Moreover, the information processing apparatus 10 is able to rapidly detect a situation in which a countermeasure is needed in advance, with the high-speed process.

### [b] Second Embodiment

While the embodiment of the present invention has been described above, the present invention may be embodied in various forms other than the above-described embodiment.

### Numerals etc.

Numerical examples, the number of cameras, label names, examples of the rules, examples of the behaviors, examples of the states, and the like used in the embodiment as described above are mere examples, and may be arbitrarily changed. Furthermore, the flow of the processes described in each of the flowcharts may be appropriately changed as long as no contradiction is derived. Moreover, the store is described as an example in the embodiment as described above, but embodiments are not limited to this example, and the technology may be applied to, for example, a warehouse, a factory, a classroom, inside of a train, inside of a plane, or the like.

### Example of scene graph

In the embodiment as described above, generation of a single scene graph including a plurality of relationships and identification of a relationship using the scene graph have been described, but embodiments are not limited to this example. For example, the information processing apparatus 10 may generate a single scene graph for a single relationship. In other words, the information processing apparatus 10 may generate and use a single scene graph including N (N is a numeral equal to or larger than 1) relationships or generate and use N scene graphs corresponding to the N relationships. If the N scene graphs are used, identification of a scene graphs results in identification of a relationship. In this case, the information processing apparatus 10 is able to identify a relationship by identifying a type of a person, a type of an object, the number of persons, and the like in a frame from the frame, and identifying a single scene graph that includes the above-described information as an object or an attribute.

Furthermore, the information processing apparatus 10 may generate a scene graph for each of frames. A relationship between a frame included in video data and a scene graph will be described below with reference to FIG. 17. The graph generation unit 41 generates a scene graph for each of frames. Then, the graph generation unit 41 generates a new scene graph by integrating the scene graphs that are generated for the respective frames into a single graph. For example, the graph generation unit 41 identifies that a node (object) 1 that is included in a scene graph 1 generated from the frame 1 and a node 2 that is included in a scene graph 2 generated from the frame 2 are the same node (object). In this case, the graph generation unit 41 connects the node 1 of the scene graph 1 and the node 2 of the scene graph 2 by a link, and integrates the node 1 and the node 2 into a single node. Consequently, the graph generation unit 41 generates a new scene graph in which the scene graph 1 and the scene graph 2 are integrated. The graph generation unit 41 stores the new scene graph in the graph data DB 23. Meanwhile, the graph generation unit 41 may generate a single scene graph from a single frame.

### System

The processing procedures, control procedures, specific names, and information including various kinds of data and parameters illustrated in the above-described document and drawings may be arbitrarily changed unless otherwise specified.

Furthermore, the components illustrated in the drawings are functionally conceptual and do not necessarily have to be physically configured in the manner illustrated in the drawings. In other words, specific forms of distribution and integration of the apparatuses are not limited to those illustrated in the drawing. In other words, all or part of the apparatuses may be functionally or physically distributed or integrated in arbitrary units depending on various loads or use conditions.

Moreover, for each processing function performed by each apparatus, all or any part of the processing function may be implemented by a central processing unit (CPU) and a program analyzed and executed by the CPU or may be implemented as hardware by wired logic.

### Hardware

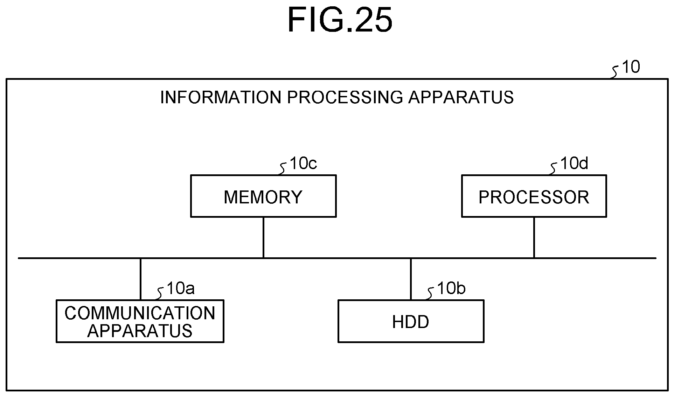

FIG. 25 is a diagram for explaining a hardware configuration example. As illustrated in FIG. 23, the information processing apparatus 10 includes a communication apparatus 10a, a hard disk drive (HDD) 10b, a memory 10c, and a processor 10d. All of the units illustrated in FIG. 25 are connected to one another via a bus or the like.

The communication apparatus 10a is a network interface card or the like and performs communication with a different apparatus. The HDD 10b stores therein a program and a DB for operating the functions as illustrated in FIG. 4.

The processor 10d reads a program that performs the same process as each of the processing units illustrated in FIG. 4 from the HDD 10b or the like and loads the program onto the memory 10c, so that a process for implementing each of the functions described with reference to FIG. 4 or the like is operated. For example, the process implements the same functions as each of the processing units included in the information processing apparatus 10. Specifically, the processor 10d reads a program having the same functions as the pre-processing unit 40, the operation processing unit 50, and the like from the HDD 10b or the like. Then, the processor 10d performs a process that executes the same processes as the pre-processing unit 40, the operation processing unit 50, and the like.

In this manner, the information processing apparatus 10 functions as an information processing apparatus that reads the program and executes the program to implement a behavior prediction method. Further, the information processing apparatus 10 may cause a medium reading device to read the above-described program from a recording medium and execute the read program as described above to implement the same functions as the embodiment as described above. Meanwhile, the program described in the other embodiments need not always be executed by the information processing apparatus 10. For example, even when a different computer or a server executes the program or when the different computer and the server execute the program in a cooperative manner, the embodiments as described above may be applied in the same manner.

The program may be distributed via a network, such as the Internet. Further, the program may be recorded in a computer-readable recording medium, such as a hard disk, a flexible disk (FD), a compact disc read only memory (CD-ROM), a magneto-optical disk (MO), or a digital versatile disk (DVD), and may be executed by being read from the recording medium by the computer.

According to the embodiments, it is possible to detect a situation in which a countermeasure is needed in advance from video data.

## Claims

1. An information processing program that causes a computer (10) to execute a process comprising:
acquiring (51) video data that includes target objects including a person and an object;
first identifying (52) a relationship between the target objects in the acquired video data, by using graph data in which a relationship between a person and another person or a relationship between a person and an object is defined;
second identifying (53) a current behavior of the person in the video data by using a feature value including facial expression and skeleton information indicating joint positions of the person included in the acquired video data; and
predicting (54) a future behavior of the person including an emotion and a state of the person that is not easily determined by appearance of the person and that is affected by an internal state of the person, by inputting the identified current behavior of the person and the identified relationship to a machine learning model.

2. The information processing program according to claim 1, wherein
the identified behavior of the person is included in a first frame among a plurality of frames that constitute the video data,
the identified relationship is included in a second frame among the plurality of frames that constitute the video data, and
the predicting (54) includes
determining whether the second frame is detected in a certain range corresponding to one of a certain number of frames and a certain period of time, the certain range being set in advance from a time point at which the first frame is detected; and
predicting one of the future behavior and the future state of the person based on the behavior of the person included in the first frame and the relationship included in the second frame when it is determined that the second frame is detected in the certain range that is set in advance and that corresponds to one of the certain number of frames and the certain period of time.

3. The information processing program according to claim 1, wherein
the graph data is a directed graph in which objects including a person and an object that appear in video data serve as nodes, and relationships between the nodes serve as directed edges, and
the first identifying (52) includes
identifying a person and an object that are included in the video data; and
identifying a node corresponding to the identified person and a node corresponding to the identified object, and identifying a relationship between the identified nodes in the directed graph.

4. The information processing program according to claim 1, wherein
the second identifying (53) includes
acquiring a first machine learning model in which a parameter of a neural network is changed such that an error between an output result that is output from the neural network when an explanatory variable that is image data is input to the neural network and correct answer data that is a label of an action is reduced;
identifying an action of each of parts of the person by inputting the video data to the first machine learning model;
acquiring a second machine learning model in which a parameter of a neural network is changed such that an error between an output result that is output from the neural network when an explanatory variable that is image data including a facial expression of the person is input to the neural network and correct answer data that represents an objective variable as a strength of each of markers of a facial expression of the person is reduced;
generating a strength of each of the markers of the person by inputting the video data to the second machine learning model;
identifying the facial expression of the person by using the generated strength of the markers; and
identifying a current behavior of the person in the video data by comparing the identified action of each of the parts of the person, the identified facial expression of the person, and a rule that is set in advance.

5. The information processing program according to claim 1, wherein the predicting (54) includes predicting a future behavior of the person through Bayesian inference by using the identified current behavior of the person and the identified relationship.

6. The information processing program according to claim 3, wherein
the acquiring (51) includes acquiring the video data including a customer who moves in an area of a product shelf that is a predetermined area in a store,
the second identifying (53) includes identifying a current behavior of the customer by using a feature value of the customer in the video data,
the first identifying (52) includes identifying a node corresponding to the identified customer and a node corresponding to an identified product, and identifying a relationship between the identified nodes in the directed graph, and
the predicting (54) includes predicting a behavior related to a purchase of the product by the customer, by inputting the identified current behavior of the customer and the identified relationship to the machine learning model.

7. The information processing program according to claim 1, wherein
the graph data is a directed graph in which objects including a person and an object that appear in video data serve as nodes, and relationships between the nodes serve as directed edges, and
the first identifying (52) includes
identifying a first person and a second person that are included in the video data; and
identifying a node corresponding to each of the identified first person and the identified second person, and identifying a relationship between the identified nodes in the directed graph.

8. The information processing program according to claim 7, wherein
the acquiring (51) includes acquiring the video data captured in a street,
the second identifying (53) includes identifying a behavior of a committer and a behavior of a victim, by using a feature value corresponding to each of the committer and the victim in the video data,
the first identifying (52) includes identifying a node corresponding to each of the identified committer and the identified victim, and identifying a relationship between the identified nodes in the directed graph, and
the predicting (54) includes predicting a criminal activity of the committer with respect to the victim, by inputting the identified behaviors of the committer and the victim as well as the identified relationship to the machine learning model.

9. An information processing method that causes a computer (10) to execute a process comprising:
acquiring (51) video data that includes target objects including a person and an object;
identifying (52) a relationship between the target objects in the acquired video data, by using graph data in which a relationship between a person and another person or a relationship between a person and an object is defined;
identifying (53) a current behavior of the person in the video data by using a feature value including facial expression and skeleton information indicating joint positions of the person included in the acquired video data; and
predicting (54) a future behavior of the person including an emotion and a state of the person that is not easily determined by appearance of the person and that is affected by an internal state of the person, by inputting the identified current behavior of the person and the identified relationship to a machine learning model.

10. An information processing apparatus (10) comprising:
a control unit (30) configured to
acquire video data that includes target objects including a person and an object;
identify a relationship between the target objects in the acquired video data, by using graph data in which a relationship between a person and another person or a relationship between a person and an object is defined;
identify a current behavior of the person in the video data by using a feature value including facial expression and skeleton information indicating joint positions of the person included in the acquired video data; and
predict a future behavior of the person including an emotion and a state of the person that is not easily determined by appearance of the person and that is affected by an internal state of the person, by inputting the identified current behavior of the person and the identified relationship to a machine learning model.

## Patentansprüche

1. Informationsverarbeitungsprogramm, das einen Computer (10) veranlasst, einen Prozess auszuführen, der Folgendes umfasst:
Erfassen (51) von Videodaten, die Zielobjekte, einschließlich einer Person und eines Objekts, einschließen;
erstes Identifizieren (52) einer Beziehung zwischen den Zielobjekten in den erfassten Videodaten, durch Verwenden von Graphdaten, in denen eine Beziehung zwischen einer Person und einer anderen Person oder eine Beziehung zwischen einer Person und einem Objekt definiert ist;
zweites Identifizieren (53) eines aktuellen Verhaltens der Person in den Videodaten, durch Verwenden eines Merkmalswerts, einschließlich Gesichtsausdruck und Skelettinformationen, die die Gelenkpositionen der in den erfassten Videodaten enthaltenen Person angeben; und
Vorhersagen (54) eines zukünftigen Verhaltens der Person, einschließlich einer Emotion und eines Zustands der Person, der nicht leicht anhand des äußeren Erscheinungsbildes der Person bestimmbar ist und der von einem inneren Zustand der Person beeinflusst ist, durch Eingeben des identifizierten aktuellen Verhaltens der Person und der identifizierten Beziehung in ein maschinelles Lernmodell.

2. Informationsverarbeitungsprogramm nach Anspruch 1, wobei
das identifizierte Verhalten der Person in einem ersten Einzelbild unter einer Vielzahl von Einzelbildern, die die Videodaten bilden, enthalten ist,
die identifizierte Beziehung in einem zweiten Einzelbild unter der Vielzahl von Einzelbildern, die die Videodaten bilden, enthalten ist, und
das Vorhersagen (54) einschließt
Bestimmen, ob das zweite Einzelbild in einem bestimmten Bereich erkannt wird, der einem von einer bestimmten Anzahl von Einzelbildern und einer bestimmten Zeitspanne entspricht, wobei der bestimmte Bereich im Voraus ab einem Zeitpunkt festgelegt ist, zu dem das erste Einzelbild erkannt wird; und
Vorhersagen eines von dem zukünftigen Verhalten und dem zukünftigen Zustand der Person basierend auf dem Verhalten der Person im ersten Einzelbild und der Beziehung im zweiten Einzelbild, wenn bestimmt wird, dass das zweite Einzelbild in dem im Voraus festgelegten bestimmten Bereich erkannt wird, der einem von der bestimmten Anzahl von Einzelbildern und der bestimmten Zeitspanne entspricht.

3. Informationsverarbeitungsprogramm nach Anspruch 1, wobei
die Graphdaten ein gerichteter Graph sind, in dem Objekte, einschließlich einer Person und eines Objekts, die in Videodaten erscheinen, als Knoten dienen, und Beziehungen zwischen den Knoten als gerichtete Kanten dienen, und
das erste Identifizieren (52) Folgendes einschließt:
Identifizieren einer Person und eines Objekts, die in den Videodaten enthalten sind; und
Identifizieren eines Knotens, der der identifizierten Person entspricht, und eines Knotens, der dem identifizierten Objekt entspricht, und Identifizieren einer Beziehung zwischen den identifizierten Knoten in dem gerichteten Graphen.

4. Informationsverarbeitungsprogramm nach Anspruch 1, wobei das zweite Identifizieren (53) Folgendes einschließt:
Erhalten eines ersten maschinellen Lernmodells, in dem ein Parameter eines neuronalen Netzes so geändert ist, dass ein Fehler zwischen einem Ausgaberesultat, das von dem neuronalen Netz ausgegeben wird, wenn eine erklärende Variable, die Bilddaten sind, dem neuronalen Netz eingegeben wird, und Korrektantwortdaten, die ein Label einer Aktion sind, verringert wird;
Identifizieren einer Aktion jedes der Teile der Person durch Eingeben der Videodaten in das erste maschinelle Lernmodell;
Erhalten eines zweiten maschinellen Lernmodells, in dem ein Parameter eines neuronalen Netzes so geändert ist, dass ein Fehler zwischen einem Ausgaberesultat, das von dem neuronalen Netz ausgegeben wird, wenn eine erklärende Variable, die Bilddaten einschließlich eines Gesichtsausdrucks der Person sind, dem neuronalen Netz eingegeben wird, und Korrektantwortdaten, die eine Zielvariable als Stärke jedes der Marker des Gesichtsausdrucks der Person darstellen, verringert wird;
Generieren einer Stärke jedes der Marker der Person durch Eingeben der Videodaten in das zweite maschinelle Lernmodell;
Identifizieren des Gesichtsausdrucks der Person unter Verwendung der generierten Stärke der Marker; und
Identifizieren eines aktuellen Verhaltens der Person in den Videodaten durch Vergleichen der identifizierten Aktion jedes der Teile der Person, des identifizierten Gesichtsausdrucks der Person und einer Regel, die im Voraus festgelegt ist.

5. Informationsverarbeitungsprogramm nach Anspruch 1, wobei das Vorhersagen (54) das Vorhersagen eines zukünftigen Verhaltens der Person durch Bayessche Inferenz unter Verwendung des identifizierten aktuellen Verhaltens der Person und der identifizierten Beziehung einschließt.

6. Informationsverarbeitungsprogramm nach Anspruch 3, wobei
das Erfassen (51) das Erfassen der Videodaten, die einen Kunden einschließen, der sich in einem Bereich eines Produktregals bewegt, der ein vorbestimmter Bereich in einem Geschäft ist, einschließt,
das zweite Identifizieren (53) das Identifizieren eines aktuellen Verhaltens des Kunden unter Verwendung eines Merkmalswerts des Kunden in den Videodaten einschließt,
das erste Identifizieren (52) das Identifizieren eines Knotens, der dem identifizierten Kunden entspricht, und eines Knotens, der einem identifizierten Produkt entspricht, und das Identifizieren einer Beziehung zwischen den identifizierten Knoten in dem gerichteten Graphen einschließt, und
das Vorhersagen (54) das Vorhersagen eines Verhaltens in Bezug auf einen Kauf des Produkts durch den Kunden einschließt, durch Eingeben des identifizierten aktuellen Verhaltens des Kunden und der identifizierten Beziehung in das maschinelle Lernmodell.

7. Informationsverarbeitungsprogramm nach Anspruch 1, wobei
die Graphdaten ein gerichteter Graph sind, in dem Objekte, einschließlich einer Person und eines Objekts, die in Videodaten erscheinen, als Knoten dienen, und Beziehungen zwischen den Knoten als gerichtete Kanten dienen, und
das erste Identifizieren (52) Folgendes einschließt:
Identifizieren einer ersten Person und einer zweiten Person, die in den Videodaten enthalten sind; und
Identifizieren eines Knotens, der jeweils der identifizierten ersten Person und der identifizierten zweiten Person entspricht, und Identifizieren einer Beziehung zwischen den identifizierten Knoten in dem gerichteten Graphen.

8. Informationsverarbeitungsprogramm nach Anspruch 7, wobei
das Erfassen (51) das Erfassen der in einer Straße aufgenommenen Videodaten einschließt,
das zweite Identifizieren (53) das Identifizieren eines Verhaltens eines Täters und eines Verhaltens eines Opfers unter Verwendung eines Merkmalswerts, der jeweils dem Täter und dem Opfer in den Videodaten entspricht, einschließt,
das erste Identifizieren (52) das Identifizieren eines Knotens, der jeweils dem identifizierten Täter und dem identifizierten Opfer entspricht, und das Identifizieren einer Beziehung zwischen den identifizierten Knoten in dem gerichteten Graphen einschließt, und
das Vorhersagen (54) das Vorhersagen einer kriminellen Aktivität des Täters gegenüber dem Opfer einschließt, durch Eingeben der identifizierten Verhaltensweisen des Täters und des Opfers sowie der identifizierten Beziehung in das maschinelle Lernmodell.

9. Informationsverarbeitungsverfahren, das einen Computer (10) veranlasst, einen Prozess auszuführen, der Folgendes umfasst:
Erfassen (51) von Videodaten, die Zielobjekte, einschließlich einer Person und eines Objekts, einschließen;
Identifizieren (52) einer Beziehung zwischen den Zielobjekten in den erfassten Videodaten durch Verwenden von Graphdaten, in denen eine Beziehung zwischen einer Person und einer anderen Person oder eine Beziehung zwischen einer Person und einem Objekt definiert ist;
Identifizieren (53) eines aktuellen Verhaltens der Person in den Videodaten durch Verwenden eines Merkmalswerts, einschließend Gesichtsausdruck und Skelettinformationen, die die Gelenkpositionen der in den erfassten Videodaten enthaltenen Person angeben; und
Vorhersagen (54) eines zukünftigen Verhaltens der Person, einschließlich einer Emotion und eines Zustands der Person, der nicht leicht anhand des äußeren Erscheinungsbildes der Person bestimmbar ist und der von einem inneren Zustand der Person beeinflusst ist, durch Eingeben des identifizierten aktuellen Verhaltens der Person und der identifizierten Beziehung in ein maschinelles Lernmodell.

10. Informationsverarbeitungsvorrichtung (10), umfassend:
eine Steuereinheit (30), ausgebildet zum:
Erfassen von Videodaten, die Zielobjekte einschließen, einschließlich einer Person und eines Objekts;
Identifizieren einer Beziehung zwischen den Zielobjekten in den erfassten Videodaten durch Verwenden von Graphdaten, in denen eine Beziehung zwischen einer Person und einer anderen Person oder eine Beziehung zwischen einer Person und einem Objekt definiert ist;
Identifizieren eines aktuellen Verhaltens der Person in den Videodaten durch Verwenden eines Merkmalswerts, einschließend Gesichtsausdruck und Skelettinformationen, die die Gelenkpositionen der in den erfassten Videodaten enthaltenen Person angeben; und
Vorhersagen eines zukünftigen Verhaltens der Person, einschließlich einer Emotion und eines Zustands der Person, der nicht leicht anhand des äußeren Erscheinungsbildes der Person bestimmbar ist und der von einem inneren Zustand der Person beeinflusst ist, durch Eingeben des identifizierten aktuellen Verhaltens der Person und der identifizierten Beziehung in ein maschinelles Lernmodell.

## Revendications

1. Programme de traitement d'informations qui amène un ordinateur (10) à exécuter un processus comprenant :
une acquisition (51) de données vidéo qui incluent des objets cibles incluant une personne et un objet ;
une première identification (52) d'une relation entre les objets cibles dans les données vidéo acquises, en utilisant des données de graphe dans lesquelles une relation entre une personne et une autre personne ou une relation entre une personne et un objet est définie ;
une deuxième identification (53) d'un comportement actuel de la personne dans les données vidéo en utilisant une valeur de caractéristique incluant une expression faciale et des informations de squelette indiquant des positions d'articulations de la personne incluse dans les données vidéo acquises ; et
une prédiction (54) d'un comportement futur de la personne incluant une émotion et un état de la personne qui n'est pas facilement déterminé par l'apparence de la personne et qui est affecté par un état interne de la personne, en entrant le comportement actuel identifié de la personne et la relation identifiée dans un modèle d'apprentissage automatique.

2. Programme de traitement d'informations selon la revendication 1, dans lequel
le comportement identifié de la personne est inclus dans une première trame parmi une pluralité de trames qui constituent les données vidéo,
la relation identifiée est incluse dans une deuxième trame parmi la pluralité de trames qui constituent les données vidéo, et
la prédiction (54) inclut
une détermination de si la deuxième trame est détectée dans une certaine plage correspondant à un élément parmi un certain nombre de trames et une certaine période de temps, ladite certaine plage étant définie à l'avance à partir d'un instant au niveau duquel la première trame est détectée ; et
une prédiction d'un élément parmi le comportement futur et l'état futur de la personne sur la base du comportement de la personne inclus dans la première trame et de la relation incluse dans la deuxième trame lorsqu'il est déterminé que la deuxième trame est détectée dans la certaine plage qui est définie à l'avance et qui correspond à un élément parmi ledit certain nombre de trames et ladite certaine période de temps.

3. Programme de traitement d'informations selon la revendication 1, dans lequel
les données de graphe sont un graphe orienté dans lequel des objets incluant une personne et un objet qui apparaissent dans des données vidéo servent de nœuds, et des relations entre les nœuds servent d'arcs orientés, et
la première identification (52) inclut
une identification d'une personne et d'un objet qui sont inclus dans les données vidéo ; et
une identification d'un nœud correspondant à la personne identifiée et d'un nœud correspondant à l'objet identifié, et une identification d'une relation entre les nœuds identifiés dans le graphe orienté.

4. Programme de traitement d'informations selon la revendication 1, dans lequel la deuxième identification (53) inclut
une acquisition d'un premier modèle d'apprentissage automatique dans lequel un paramètre d'un réseau de neurones est changé de telle sorte qu'une erreur entre un résultat de sortie qui est délivré en sortie du réseau de neurones lorsqu'une variable explicative qui consiste en des données d'image est entrée dans le réseau de neurones et des données de réponse correcte qui sont une étiquette d'une action est réduite ;
une identification d'une action de chacune de parties de la personne en entrant les données vidéo dans le premier modèle d'apprentissage automatique ;
une acquisition d'un deuxième modèle d'apprentissage automatique dans lequel un paramètre d'un réseau de neurones est changé de telle sorte qu'une erreur entre un résultat de sortie qui est délivré en sortie du réseau de neurones lorsqu'une variable explicative qui consiste en des données d'image incluant une expression faciale de la personne est entrée dans le réseau de neurones et des données de réponse correcte qui représentent une variable objective en tant qu'une intensité de chacun de marqueurs d'une expression faciale de la personne est réduite ;
une génération d'une intensité de chacun des marqueurs de la personne en entrant les données vidéo dans le deuxième modèle d'apprentissage automatique ;
une identification de l'expression faciale de la personne en utilisant l'intensité générée des marqueurs ; et
une identification d'un comportement actuel de la personne dans les données vidéo en comparant l'action identifiée de chacune des parties de la personne, l'expression faciale identifiée de la personne, et une règle qui est définie à l'avance.

5. Programme de traitement d'informations selon la revendication 1, dans lequel la prédiction (54) inclut une prédiction d'un comportement futur de la personne par inférence bayésienne en utilisant le comportement actuel identifié de la personne et la relation identifiée.

6. Programme de traitement d'informations selon la revendication 3, dans lequel
l'acquisition (51) inclut une acquisition des données vidéo incluant un client qui se déplace dans une zone d'un rayon de produits qui est une zone prédéterminée dans un magasin,
la deuxième identification (53) inclut une identification d'un comportement actuel du client en utilisant une valeur de caractéristique du client dans les données vidéo,
la première identification (52) inclut une identification d'un nœud correspondant au client identifié et d'un nœud correspondant à un produit identifié, et une identification d'une relation entre les nœuds identifiés dans le graphe orienté, et
la prédiction (54) inclut une prédiction d'un comportement lié à un achat du produit par le client, en entrant le comportement actuel identifié du client et la relation identifiée dans le modèle d'apprentissage automatique.

7. Programme de traitement d'informations selon la revendication 1, dans lequel
les données de graphe sont un graphe orienté dans lequel des objets incluant une personne et un objet qui apparaissent dans des données vidéo servent de nœuds, et des relations entre les nœuds servent d'arcs orientés, et
la première identification (52) inclut
une identification d'une première personne et d'une deuxième personne qui sont incluses dans les données vidéo ; et
une identification d'un nœud correspondant à chacune de la première personne identifiée et de la deuxième personne identifiée, et une identification d'une relation entre les nœuds identifiés dans le graphe orienté.

8. Programme de traitement d'informations selon la revendication 7, dans lequel
l'acquisition (51) inclut une acquisition des données vidéo capturées dans une rue,
la deuxième identification (53) inclut une identification d'un comportement d'un auteur et d'un comportement d'une victime, en utilisant une valeur de caractéristique correspondant à chacun de l'auteur et de la victime dans les données vidéo,
la première identification (52) inclut une identification d'un nœud correspondant à chacun de l'auteur identifié et de la victime identifiée, et une identification d'une relation entre les nœuds identifiés dans le graphe orienté, et
la prédiction (54) inclut une prédiction d'une activité criminelle de l'auteur à l'égard de la victime, en entrant les comportements identifiés de l'auteur et de la victime ainsi que la relation identifiée dans le modèle d'apprentissage automatique.

9. Procédé de traitement d'informations qui amène un ordinateur (10) à exécuter un processus comprenant :
une acquisition (51) de données vidéo qui incluent des objets cibles incluant une personne et un objet ;
une identification (52) d'une relation entre les objets cibles dans les données vidéo acquises, en utilisant des données de graphe dans lesquelles une relation entre une personne et une autre personne ou une relation entre une personne et un objet est définie ;
une identification (53) d'un comportement actuel de la personne dans les données vidéo en utilisant une valeur de caractéristique incluant une expression faciale et des informations de squelette indiquant des positions d'articulations de la personne incluse dans les données vidéo acquises ; et
une prédiction (54) d'un comportement futur de la personne incluant une émotion et un état de la personne qui n'est pas facilement déterminé par l'apparence de la personne et qui est affecté par un état interne de la personne, en entrant le comportement actuel identifié de la personne et la relation identifiée dans un modèle d'apprentissage automatique.

10. Appareil de traitement d'informations (10) comprenant :
une unité de commande (30) configurée pour
acquérir des données vidéo qui incluent des objets cibles incluant une personne et un objet ;
identifier une relation entre les objets cibles dans les données vidéo acquises, en utilisant des données de graphe dans lesquelles une relation entre une personne et une autre personne ou une relation entre une personne et un objet est définie ;
identifier un comportement actuel de la personne dans les données vidéo en utilisant une valeur de caractéristique incluant une expression faciale et des informations de squelette indiquant des positions d'articulations de la personne incluse dans les données vidéo acquises ; et
prédire un comportement futur de la personne incluant une émotion et un état de la personne qui n'est pas facilement déterminé par l'apparence de la personne et qui est affecté par un état interne de la personne, en entrant le comportement actuel identifié de la personne et la relation identifiée dans un modèle d'apprentissage automatique.
